(19) **Europäisches Patentamt**
**European Patent Office**
**Office européen des brevets**

(11) **EP 4 618 611 A1**

(12) **EUROPEAN PATENT APPLICATION**
published in accordance with Art. 153(4) EPC

(43) Date of publication:
**17.09.2025 Bulletin 2025/38**

(21) Application number: **23887841.7**

(22) Date of filing: **31.10.2023**

(51) International Patent Classification (IPC):
**H04W 24/08** (2009.01)

(52) Cooperative Patent Classification (CPC):
**H04L 5/00; H04W 24/02; H04W 24/08**

(86) International application number:
**PCT/CN2023/128012**

(87) International publication number:
**WO 2024/099151 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.11.2022 CN 202211387682**
**09.05.2023 CN 202310517105**

(71) Applicant: **Vivo Mobile Communication Co., Ltd.**
**Dongguan, Guangdong 523863 (CN)**

(72) Inventors:
• **WEI, Xusheng**
**Dongguan, Guangdong 523863 (CN)**
• **LIU, Xuanbing**
**Dongguan, Guangdong 523863 (CN)**

(74) Representative: **Conti, Marco**
**Bugnion S.p.A.**
**Via di Corticella, 87**
**40128 Bologna (IT)**

(54) **MEASUREMENT GAP CONFLICT PROCESSING METHOD AND APPARATUS, AND TERMINAL AND NETWORK-SIDE DEVICE**

(57) This application relates to the field of communications technologies, and discloses a method and an apparatus for processing a measurement gap conflict, a terminal, and a network-side device. The method for processing a measurement gap conflict on a terminal side in embodiments of this application includes: The terminal sends a first message to the network-side device, where the first message carries indication information of N measurement gaps, the N measurement gaps include M measurement gaps, the M measurement gaps conflict with each other and are used for measuring measurement objects located at a first frequency, and both N and M are integers greater than or equal to 2. The terminal receives a second message from the network-side device, where the second message carries a configuration parameter. The terminal performs first processing on the M measurement gaps based on the configuration parameter, where the first processing is non-drop processing performed based on a preset non-drop rule.

A terminal sends a first message to a network-side device, where the first message carries indication information of N measurement gaps, the N measurement gaps include M measurement gaps, and the M measurement gaps conflict with each other and are used for measuring measurement objects located at a first frequency — 201

The terminal receives a second message from the network-side device, where the second message carries a configuration parameter — 202

The terminal performs first processing on the M measurement gaps based on the configuration parameter, where the first processing is non-drop processing performed based on a preset non-drop rule — 203

FIG. 2

**Description**

**CROSS-REFERENCE TO RELATED APPLICATIONS**

This application claims priority to Chinese Patent Application No.202211387682.7 filed in China on November 07, 2022, and Chinese Patent Application No.202310517105.3 filed in China on May 09, 2023, which are incorporated herein by reference in its entirety.

**TECHNICAL FIELD**

This application relates to the field of communications technologies, and specifically, to a method and an apparatus for processing a measurement gap conflict, a terminal, and a network-side device.

**BACKGROUND**

In a related new radio (New Radio, NR) system, only one measurement gap pattern (GAP pattern) is usually configured for one terminal. As time-domain complexity or frequency-domain complexity of a measurement object (Measurement Object, MO) increases, in a related technology, to ensure more efficient measurement that is based on a measurement gap, a plurality of MOs are aligned as much as possible in time domain. However, this reduces flexibility of network configuration. To improve flexibility of the network configuration and also to reduce overheads of the measurement gap, a mechanism of configuring a plurality of measurement gap patterns for the terminal is provided, and the mechanism may cause different measurement gap patterns to conflict with each other. Currently, there is no solution to how the terminal processes a measurement gap conflict. Consequently, the terminal cannot properly process the measurement gap conflict.

**SUMMARY**

Embodiments of this application provide a method and an apparatus for processing a measurement gap conflict, a terminal, and a network-side device, to resolve a problem that the terminal cannot properly process a measurement gap conflict.

According to a first aspect, a method for processing a measurement gap conflict is provided. The method includes:

sending, by a terminal, a first message to a network-side device, where the first message carries indication information of N measurement gaps, the N measurement gaps include M measurement gaps, the M measurement gaps conflict with each other and are used for measuring measurement objects located at a first frequency, and both N and M are integers greater than or equal to 2;

receiving, by the terminal, a second message from the network-side device, where the second message carries a configuration parameter; and

performing, by the terminal, first processing on the M measurement gaps based on the configuration parameter, where the first processing is non-drop processing performed based on a preset non-drop rule.

According to a second aspect, an apparatus for processing a measurement gap conflict is provided. The apparatus is applied to a terminal and includes:

a sending module, configured to send a first message to a network-side device, where the first message carries indication information of N measurement gaps, the N measurement gaps include M measurement gaps, the M measurement gaps conflict with each other and are used for measuring measurement objects located at a first frequency, and both N and M are integers greater than or equal to 2;

a receiving module, configured to receive a second message from the network-side device, where the second message carries a configuration parameter; and

a first processing module, configured to perform first processing on the M measurement gaps based on the configuration parameter, where the first processing is non-drop processing performed based on a preset non-drop rule.

According to a third aspect, a method for processing a measurement gap conflict is provided. The method includes:

receiving, by a network-side device, a first message from a terminal, where the first message carries indication information of N measurement gaps, the N measurement gaps include M measurement gaps, the M measurement gaps conflict with each other and are used for measuring measurement objects located at a first frequency, and both N and M are integers greater than or equal to 2; and

sending, by the network-side device, a second message to the terminal, where the second message carries a configuration parameter, the configuration parameter is used for non-drop processing, and the non-drop processing is based on a preset non-drop rule.

According to a fourth aspect, an apparatus for processing a measurement gap conflict is provided. The apparatus is applied to a network-side device and includes:

a receiving module, configured to receive a first message from a terminal, where the first message carries indication information of N measurement gaps, the N measurement gaps include M measurement gaps, the M measurement gaps conflict with each other and are used for measuring measurement objects located at a first frequency, and both N and M are integers greater than or equal to 2; and

a sending module, configured to send a second message to the terminal, where the second message carries a configuration parameter, the configuration parameter is used for non-drop processing, and the non-drop processing is based on a preset non-drop rule.

According to a fifth aspect, a terminal is provided, where the terminal includes a processor and a memory, the memory stores a program or instructions capable of running on the processor, and when the program or the instructions are executed by the processor, the steps of the method according to the first aspect are implemented.

According to a sixth aspect, a terminal is provided, including a processor and a communication interface. The communication interface is configured to: send a first message to a network-side device, where the first message carries indication information of N measurement gaps, the N measurement gaps include M measurement gaps, the M measurement gaps conflict with each other and are used for measuring measurement objects located at a first frequency, and both N and M are integers greater than or equal to 2; and receive a second message from the network-side device, where the second message carries a configuration parameter; and the processor is configured to: perform first processing on the M measurement gaps based on the configuration parameter, where the first processing is non-drop processing performed based on a preset non-drop rule.

According to a seventh aspect, a network-side device is provided. The network-side device includes a processor and a memory. The memory stores a program or instructions capable of running on the processor. When the program or the instructions are executed by the processor, the steps of the method according to the third aspect are implemented.

According to an eighth aspect, a network-side device is provided, including a processor and a communication interface, where the communication interface is configured to: receive a first message from a terminal, where the first message carries indication information of N measurement gaps, the N measurement gaps include M measurement gaps, the M measurement gaps conflict with each other and are used for measuring measurement objects located at a first frequency, and both N and M are integers greater than or equal to 2; and send a second message to the terminal, where the second message carries a configuration parameter, the configuration parameter is used for non-drop processing, and the non-drop processing is based on a preset non-drop rule.

According to a ninth aspect, a communication system is provided, including: a terminal and a network-side device, where the terminal may be configured to perform the steps of the method according to the first aspect, and the network-side device may be configured to perform the steps of the method according to the third aspect.

According to a tenth aspect, a readable storage medium is provided, where the readable storage medium stores a program or instructions, and when the program or the instructions are executed by a processor, the steps of the method according to the first aspect or the third aspect are implemented.

According to an eleventh aspect, a chip is provided, where the chip includes a processor and a communication interface, the communication interface is coupled to the processor, and the processor is configured to run a program or instructions, to implement the method according to the first aspect or the third aspect.

According to a twelfth aspect, a computer program/program product is provided, stored in a storage medium and executed by at least one processor to implement the steps of the method according to the first aspect or the third aspect.

In the embodiments of this application, the terminal sends indication information of conflicting measurement gaps to the network-side device, and the network-side device sends the configuration parameter, so that the terminal can perform non-drop processing on the conflicting measurement gaps based on the configuration parameter by using the preset non-drop rule. Through the foregoing process, the terminal can be enabled to properly process the measurement gap conflict, so that the terminal and the network-side device have a consistent understanding of processing of the measurement gap conflict, so that the terminal and the network-side device can have a consistent understanding of a relevant performance measurement indicator to be reached (or applied). The non-drop processing is performed on the conflicting measurement gaps, so that utilization efficiency of the measurement gap can be further increased, and a measurement delay can be reduced, thereby improving measurement performance.

**BRIEF DESCRIPTION OF THE DRAWINGS**

FIG. 1 is a block diagram of a wireless communication system to which embodiments of this application are applicable;

FIG. 2 is a flowchart 1 of a method for processing a measurement gap conflict according to an embodiment of this application;

FIG. 3 is a diagram of an example of a measurement gap conflict situation according to an embodiment of this application;

FIG. 4 is a diagram 1 of an example of a solution to processing a measurement gap conflict according to an embodiment of this application;

FIG. 5 is a diagram 2 of an example of a solution to processing a measurement gap conflict according to an embodiment of this application;

FIG. 6 is a diagram 3 of an example of a solution to processing a measurement gap conflict according to an embodiment of this application;

FIG. 7 is a diagram of an example of a solution to processing a measurement object after measurement gaps coexist according to an embodiment of this application;

FIG. 8 is a diagram 1 of a structure of an apparatus for processing a measurement gap conflict according to an embodiment of this application;

FIG. 9 is a flowchart 2 of a method for processing a measurement gap conflict according to an embodiment of this application;

FIG. 10 is a diagram 2 of a structure of an apparatus for processing a measurement gap conflict according to an embodiment of this application;

FIG. 11 is a diagram of a structure of a communication device according to an embodiment of this application;

FIG. 12 is a schematic diagram of a hardware structure of a terminal according to an embodiment of this application; and

FIG. 13 is a schematic diagram of a hardware structure of a network device according to an embodiment of this application.

**DETAILED DESCRIPTION**

The technical solutions in the embodiments of this application are clearly described in the following with reference to the accompanying drawings in the embodiments of this application. Apparently, the described embodiments are merely some rather than all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar objects instead of describing a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the number of objects is not limited, for example, there may be one or more first objects. In addition, in the specification and claims, "and/or" represents at least one of connected objects, and a character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The described technologies may be applied to both the systems and the radio technologies mentioned above as well as to other systems and radio technologies. A new radio (New Radio, NR) system is described in the following descriptions for illustrative purposes, and the NR terminology is used in most of the following descriptions, although these technologies can also be applied to applications other than the NR system application, such as the 6th generation (6th Generation, 6G) communication system.

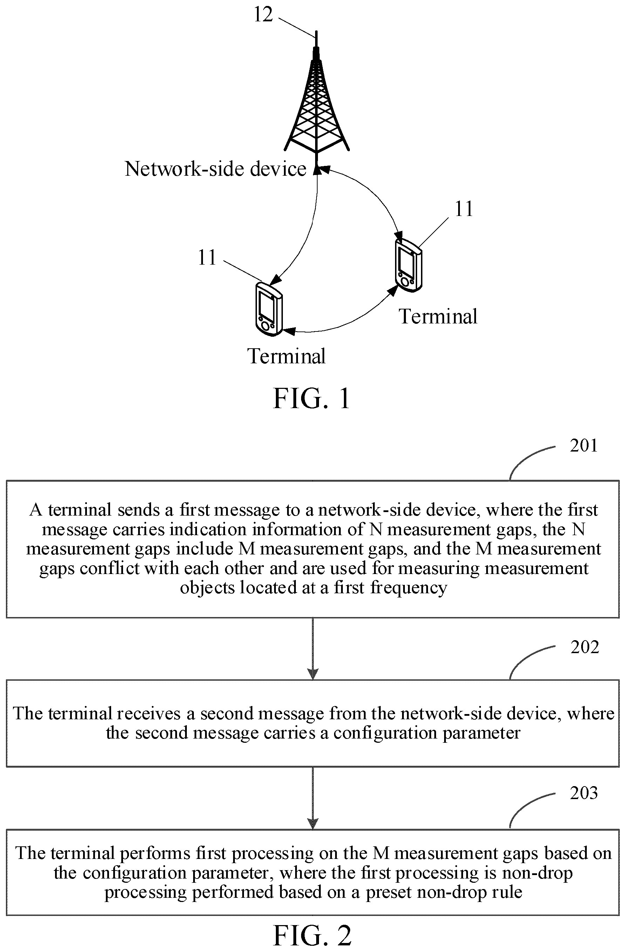

FIG. 1 is a block diagram of a wireless communication system to which the embodiments of this application are applicable. The wireless communication system includes a terminal 11 and a network-side device 12. The terminal 11 may be a mobile phone, a tablet personal computer (Tablet Personal Computer), a laptop computer (Laptop Computer or referred to as a notebook computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine or a self-service machine, and other terminal-side devices. The wearable device includes a smart watch, a smart band, a smart headset, smart glasses, smart jewelry (a smart bracelet, a smart hand chain, a smart ring, a smart necklace, a smart anklet, a smart ankle chain), a smart wristband, smart clothing, and the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a wireless fidelity (Wireless Fidelity, WiFi) node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or other appropriate terms in the art. As long as a same technical effect is achieved, the base station is not limited to a specified technical term. It should be noted that, in the embodiments of this application, only a base station in an NR system is used as an example for description, but a specific type of the base station is not limited.

In Release 15 (Release 15, R15) and Release 16 of NR, only one measurement gap pattern can be configured for one terminal, and only one gap pattern can be configured for each frequency range (Frequency range, FR). For NR, complexity of a measurement object such as positioning information, a channel state information (Channel State Information, CSI) reference signal (CSI Reference Signal, CSI-RS), a multi-universal subscriber identity module (Multiple Universal Subscriber Identity Module, MUSIM), or a national terminal number (National Terminal Number, NTN) increases. An increase in time-domain complexity is manifested by an increase in a quantity of aperiodic measurement objects, or a plurality of measurement objects have different periods and offsets (offset). An increase in frequency-domain complexity is manifested by a large increase in quantity of a possible position of a central frequency of a measurement object. In a related technology, to ensure more efficient measurement that is based on a measurement gap, it is hoped that a plurality of MOs, for example, a plurality of synchronization signal and PBCH blocks (Synchronization Signal and PBCH block, SSB), are aligned to a greatest extent in a time domain. In this way, flexibility of network configuration is reduced. To improve flexibility of the network configuration, and also to reduce overheads of the measurement gap, in Release 17 (R17), introduction of a mechanism of configuring a plurality of measurement gap patterns for one terminal is planned.

In R17, a concurrent (concurrent) gap is introduced, each terminal supports two simultaneously configured gap patterns at most, each FR may support two simultaneously configured gap patterns, and a maximum value of gap patterns of all FRs is 3. In the concurrent gap, a related priority is configured for each gap pattern. When gaps of different gap patterns conflict, which gap to be kept and which gap to be dropped is determined based on the priority. Currently, when a plurality of gap patterns are configured in R17, a gap conflict solution relies only on a drop processing solution based on a priority of the concurrent gap. A specific solution is to drop a measurement gap with a low priority based on a priority during the gap conflict.

For a plurality of features (feature) in R17, measurement gaps required by the features are configured. When the measurement gaps are simultaneously configured for the plurality of features and these measurement gaps conflict with each other, in addition to the drop processing solution, a non-drop processing solution (also referred to as coexistence processing, merging processing, sharing processing, or the like) may be further used. The drop processing solution is a relatively conservative gap conflict solution. Compared with the drop processing solution, the non-drop processing solution may further improve gap utilization efficiency, and reduce a measurement delay, thereby improving measurement performance. However, when a gap non-drop condition is met, there is currently no corresponding solution to how a terminal performs gap non-drop processing. In addition, when both the gap non-drop solution and the gap dropping solution are used, there is currently no corresponding solution to when the terminal uses the gap non-drop solution or when the terminal uses the gap dropping solution.

With reference to the accompanying drawings and by using some embodiments and application scenarios thereof, the following describes, in detail, a method and an apparatus for processing a measurement gap conflict, a terminal, and a network-side device that are provided in embodiments of this application.

Refer to FIG. 2. FIG. 2 is a flowchart 1 of a method for processing a measurement gap conflict according to an embodiment of this application. As shown in FIG. 2, the method for processing a measurement gap conflict includes the following steps.

Step 201: A terminal sends a first message to a network-side device, where the first message carries indication information of N measurement gaps, the N measurement gaps include M measurement gaps, the M measurement gaps conflict with each other and are used for measuring measurement objects located at a first frequency, and both N and M are integers greater than or equal to 2.

Step 202: The terminal receives a second message from the network-side device, where the second message carries a configuration parameter.

Step 203: The terminal performs first processing on the M measurement gaps based on the configuration parameter, where the first processing is non-drop processing performed based on a preset non-drop rule.

In this embodiment of this application, the measurement gap conflict may be understood as that at least two measurement gaps conflict in a time domain. That the M measurement gaps conflict with each other may be understood as that, for any one of the M measurement gaps, a measurement gap among the M measurement gaps conflicts with the measurement gap, or that any two of the M measurement gaps conflict with each other (that is, conflict in pairs). For example, assuming that the N measurement gaps include a gap 1, a gap 2, and a gap 3, the gap 1 conflicts with the gap 2, the gap 1 conflicts with the gap 3, and the gap 2 conflicts with the gap 3, it may be considered that the three measurement gaps that are the gap 1, the gap 2, and the gap 3 conflict with each other. It may be understood that the gap 1, the gap 2, and the gap 3 are the foregoing M measurement gaps.

When the N measurement gaps are configured for the terminal and there are the M measurement gaps that conflict with each other and are used for measuring the measurement objects located at the first frequency, because the M measurement gaps are used for measuring the measurement objects located at the same frequency, the M measurement gaps may coexist, but the terminal cannot determine how to perform non-drop processing on the M measurement gaps.

Based on this, in step 201, the terminal may send, to the network-side device, the first message carrying the indication information of the measurement gaps, so that the network-side device learns a conflict between the measurement gaps by using the first message. This enables the terminal and the network-side device to have a consistent understanding of the conflict between the measurement gaps.

After the terminal sends the first message to the network-side device, for the network-side device, in a case that the network-side device receives the first message sent by the terminal, the network-side device may send, to the terminal, the second message carrying the configuration parameter. Herein, the configuration parameter sent by the network-side device may be provided to the terminal to determine how to perform the non-drop processing on the M measurement gaps. In addition, by determining the configuration parameter, the network-side device can also have a consistent understanding of how the terminal performs the non-drop processing on the M measurement gaps. Herein, the configuration parameter may include a measurement gap configuration parameter, and may also include a non-drop indication parameter.

In step 203, the terminal may perform the first processing on the M measurement gaps based on the configuration parameter and the preset non-drop rule. It may be understood that the first processing is the non-drop processing.

After the first processing is performed, measurement gaps meeting the non-drop rule among the M measurement gaps may be remained. It may be understood that the plurality of remained measurement gaps are non-dropped measurement gaps (or coexistence measurement gaps or merged measurement gaps).

In this embodiment of this application, the terminal sends the indication information of the conflicting measurement gaps to the network-side device, and the network-side device sends the configuration parameter, so that the terminal can perform the non-drop processing on the conflicting measurement gaps based on the configuration parameter by using the preset non-drop rule. Through the foregoing process, the terminal can be enabled to properly process the measurement gap conflict, so that the terminal and the network-side device have a consistent understanding of processing of the measurement gap conflict, so that the terminal and the network-side device can have a consistent understanding of a relevant performance measurement indicator to be reached (or applied). The non-drop processing is performed on the conflicting measurement gaps, so that utilization efficiency of the measurement gap can be further increased, and a measurement delay can be reduced, thereby improving measurement performance.

In some embodiments, the indication information of the N measurement gaps includes at least one of the following:

> frequency indication information of the N measurement gaps;
> purpose indication information of the N measurement gaps;
> indication information of measurement objects associated with the N measurement gaps;
> indication information of measurement identities of the N measurement gaps;
> length indication information of the N measurement gaps; and
> period indication information of the N measurement gaps.

The foregoing frequency indication information may be used to indicate a frequency at which a measurement object measured by using the measurement gap is located. In this way, the network-side device may determine, based on the frequency indication information of the N measurement gaps, whether there are measurement gaps, among the N measurement gaps, for measuring measurement objects located at a same frequency. When there are M measurement gaps for measuring the measurement objects located at the same frequency and the M measurement gaps conflict with each other, the M measurement gaps may be considered as coexistent measurement gaps.

The foregoing purpose indication information may be used to indicate a purpose of the measurement gap, for example, to indicate a paging purpose of the measurement gap. In this way, the network-side device may determine, based on the purpose indication information of the N measurement gaps, whether there are measurement gaps used for a same purpose among the N measurement gaps. When there are M measurement gaps used for the same purpose and the M measurement gaps conflict with each other, the M measurement gaps may be considered as coexistent measurement gaps.

The foregoing indication information of the measurement objects may be used to indicate the measurement objects (Measurement Object, MO or MeasObject) associated with the measurement gaps. In this way, the network-side device may determine, based on the indication information of the measurement objects of the N measurement gaps, whether there are measurement gaps used for measuring a same measurement object among the N measurement gaps. When there are M measurement gaps used for measuring the same measurement object and the M measurement gaps conflict with each other, the M measurement gaps may be considered as coexistent measurement gaps.

The foregoing indication information of the measurement identities may be used to indicate measurement identities (Measurement Identity, MeasID) of the measurement gaps. In this way, the network-side device may determine, based on the measurement identities of the N measurement gaps, whether there are measurement gaps having a same measurement identity among the N measurement gaps. When there are M measurement gaps having a same measurement identity and the M measurement gaps conflict with each other, the M measurement gaps may be considered as coexistent measurement gaps.

The length indication information may be, for example, time domain length indication information that may be used to indicate a time domain length of the measurement gap. In this way, the network-side device may determine, based on time domain length indication information of the N measurement gaps, whether there are M measurement gaps with time domains conflicting with each other among the N measurement gaps.

The period indication information may be used to indicate that the measurement gap is a periodic gap or an aperiodic gap. When the measurement gap is a periodic gap, the period indication information of the measurement gap may further indicate a specific period of the measurement gap. A conflicting aperiodic gap may be considered as a coexistent measurement gap in order that the aperiodic gap is not dropped for measurement.

In some embodiments, the M measurement gaps meet any one of the following conditions:

a time domain interval value between any two of the M measurement gaps is less than or equal to a fifth preset value; and
a time domain coincidence degree between any two of the M measurement gaps is less than or equal to a sixth preset value.

When a time domain end moment of a previous measurement gap is after a time domain start moment of a next measurement gap, and a time domain start moment of the previous measurement gap is before the time domain start moment of the next measurement gap, time domains of the two measurement gaps coincide. In this case, the two measurement gaps conflict with each other.

When the time domain end moment of the previous measurement gap is before the time domain start moment of the next measurement gap, and there is an interval between the two gaps, there is an interval between the time domains of the two measurement gaps. When a time domain interval value between the two measurement gaps is relatively small, although the time domains do not coincide, it may also be considered that the two measurement gaps conflict with each other.

As described above, the M measurement gaps conflict with each other and are coexistent. Therefore, the M measurement gaps need to meet coexistence conditions (or referred to as non-drop conditions or merging conditions). The coexistence conditions are specifically considered as follows:

Because a measurement gap after coexistence needs to measure a measurement object corresponding to each measurement gap participating in the coexistence, when different measurement gaps have a relatively high coincidence degree or completely coincidence, after the coexistence, it cannot be ensured that all measurement objects can be measured in the gap after the coexistence. Therefore, the coexistence conditions may be as follows: $|d| \leq X$ (a unit is ms), or $|d| \leq 4$ (a unit is ms), where d is a relative distance between an end point of a first measurement gap and a start point of a second measurement gap in a time domain. When the end point of the first measurement gap is less than the start point of the second measurement gap, where d is negative, there is a time domain interval between the two measurement gaps, and in this case, the coexistence condition $|d| \leq 4$ applies. When the end point of the first measurement gap is greater than the start point of the second measurement gap, where d is positive, time domains of the two measurement gaps coincide, and the coexistence condition $|d| \leq X$ applies. Herein, it may be understood that 4 is the fifth preset value and X is the sixth preset value.

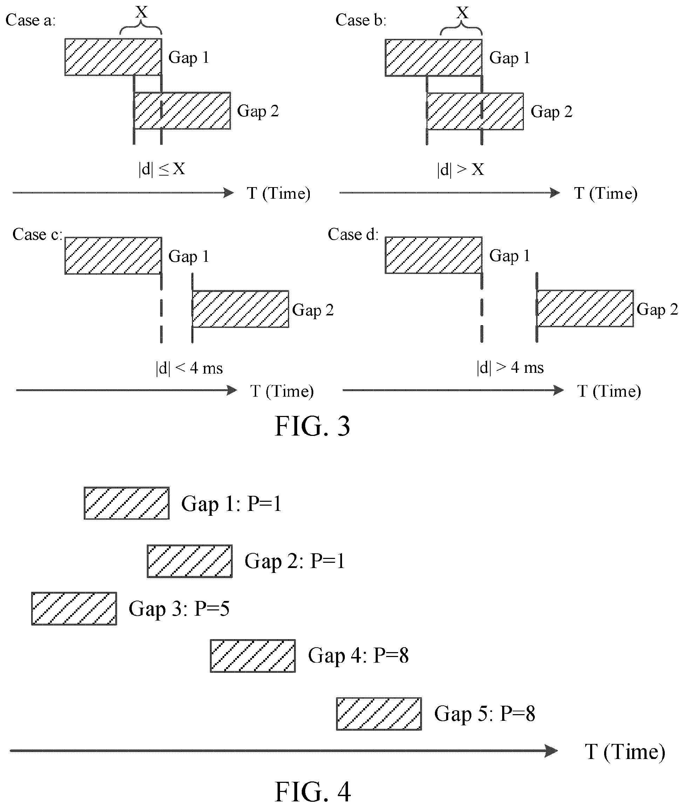

As shown in FIG. 3, for a gap 1 and a gap 2 in a case a, the gap 1 and the gap 2 conflict with each other, but meet |d| ≤ X. In this case, the gap 1 and the gap 2 conflict with each other and can coexist.

For a gap 1 and a gap 2 in a case b, the gap 1 and the gap 2 conflict with each other, but |d| > X, not meeting |d| ≤ X. Therefore, the gap 1 and the gap 2 conflict with each other but cannot coexist, and one of the measurement gaps needs to be dropped.

For a gap 1 and a gap 2 in a case c, the gap 1 and the gap 2 meet |d| ≤ 4 (ms), and the gap 1 and the gap 2 conflict with each other and can coexist.

For a gap 1 and a gap 2 in a case d, the gap 1 and the gap 2 do not meet |d| ≤ 4 (ms), and the gap 1 and the gap 2 do not conflict with each other and are two independent measurement gaps.

Therefore, in this implementation, the M measurement gaps meet the following condition: a time domain interval value between any two of the M measurement gaps meets |d| ≤ 4 (ms), or a time domain coincidence degree between any two measurement gaps meets |d| ≤ X (ms).

In some embodiments, the sixth preset value is determined by using the following formulas:

[MGL (Gap 1) - X] ≥ minimum MGL (FR1 or FR2), and [MGL (Gap 2) - X] ≥ minimum MGL (FR1 or FR2), where X represents the sixth preset value, MGL (Gap 1) and MGL (Gap 2) respectively represent minimum gap lengths of two measurement gaps, and minimum MGL (FR1 or FR2) represents minimum gap lengths in two frequency ranges.

In some embodiments, the configuration parameter includes at least one of a non-drop threshold, a non-drop identifier, a priority configuration parameter of a measurement gap, and a purpose configuration parameter of the measurement gap; and

the preset non-drop rule includes at least one of the following:

performing non-drop processing on a measurement gap whose priority configuration parameter is a first preset value;
performing non-drop processing on measurement gaps between which a priority configuration parameter difference is less than or equal to a second preset value;
performing non-drop processing on a measurement gap whose priority configuration parameter is less than or equal to a third preset value;
performing non-drop processing on a measurement gap whose priority configuration parameter is greater than or equal to a fourth preset value;
performing non-drop processing on measurement gaps with a same non-drop identifier;
performing non-drop processing on a first measurement gap with a non-drop identifier and a second measurement gap conflicting with the first measurement gap;
performing non-drop processing on measurement gaps with a same purpose configuration parameter;
performing non-drop processing on a measurement gap whose priority is a first non-drop threshold;
performing non-drop processing on a measurement gap whose priority is less than or equal to a second non-drop threshold;
performing non-drop processing on a measurement gap whose priority is greater than or equal to a third non-drop threshold;
performing non-drop processing on measurement gaps between which a priority difference is less than or equal to a fourth non-drop threshold;
performing non-drop processing on a measurement gap whose priority configuration parameter is a fifth non-drop threshold;
performing non-drop processing on measurement gaps between which a priority configuration parameter difference is less than or equal to a sixth non-drop threshold;
performing non-drop processing on a measurement gap whose priority configuration parameter is less than or equal to a seventh non-drop threshold; and
performing non-drop processing on a measurement gap whose priority configuration parameter is greater than or equal to an eighth non-drop threshold.

It should be noted that, the preset values used in this embodiment of in this application, such as the first preset value and the second preset value, may be agreed upon by a protocol, or may be previously configured by the network-side device.

The non-drop thresholds used in this embodiment of in this application, such as the first non-drop threshold and the second non-drop threshold are configured by the network-side device by using the second message.

The priority configuration parameter used in this embodiment of in this application is configured by the network-side device by using the second message.

In a case that the network-side device does not configure the priority configuration parameter by using the second message, the terminal may determine, based on a priority of the measurement gap, whether to perform the non-drop processing. That is, it may be understood that a priority used in this embodiment of this application is the priority of the measurement gap.

As described above, the configuration parameter may include a measurement gap configuration parameter, and may also include a non-drop indication parameter. When the configuration parameter includes the measurement gap configuration parameter, the measurement gap configuration parameter may be, for example, the priority configuration parameter of the measurement gap or the purpose configuration parameter of the measurement gap. When the configuration parameter includes the non-drop indication parameter, the non-drop indication parameter may be, for example, the non-drop threshold or the non-drop identifier.

The preset non-drop rule may be agreed upon by a protocol, or may be configured by the network-side device. Based on the preset non-drop rule, the network-side device and the terminal can be enabled to have a consistent understanding of the method for processing a measurement gap conflict used by the terminal.

The non-drop rule provided in this implementation mainly include a non-drop rule based on a priority, a non-drop rule based on a non-drop identifier, a non-drop rule based on a measurement object, and a non-drop rule based on a purpose.

An example in which the configuration parameter includes the measurement gap configuration parameter is used. The network-side device may send the measurement gap configuration parameter to the terminal, indicating the measurement object associated with the measurement gap, the measurement identity associated with the measurement gap, a purpose (for example, a paging purpose) associated with the measurement gap, or frequency information associated with the measurement gap. When measurement gaps associated with a same measurement object, a same measurement identity, a same purpose, or a same frequency conflict with each other, it may be considered that the measurement gaps conflicting with each other may coexist. For another example, the network-side device may configure the priority of the measurement gap, and explicitly indicate which priority gap patterns are configured such that when a conflict occurs, the conflicting measurement gaps may coexist.

An example in which the configuration parameter includes the measurement gap configuration parameter and the non-drop indication parameter is used. The network-side device may configure the priority of the measurement gap and the non-drop threshold to explicitly indicate which priority gap patterns are configured such that when a conflict occurs, the conflicting measurement gaps may coexist.

An example in which the configuration parameter includes the non-drop indication parameter is used. The network-side device may configure the non-drop identifier (or referred to as a coexistence identifier) to explicitly indicate which gap patterns are configured such that when a conflict occurs, the conflicting measurement gaps may coexist. Correspondingly, for the terminal, the terminal may send the indication information of the measurement gaps to the network-side device when the measurement gaps conflict with each other and can coexist. After receiving the configuration parameter from the network-side device, the terminal can properly process a conflict between the measurement gaps based on the configuration parameter, and the network-side device and the terminal are enabled to have a consistent understanding of how the terminal processes the conflict between the measurement gaps.

The following provides an example in which the terminal sends the indication information of the measurement gap to the network-side device.

Example 1: The terminal indicates to the network-side device that at least one measurement gap is used for a same frequency, a same serving cell frequency, or a paging purpose, and the at least one measurement gap can coexist during a conflict.

For example, the terminal sends MUSIM gap preference information to the network-side device, indicating that a gap 1 and a gap 2 are used for measuring measurement objects at a same frequency, or indicating that a gap 1 and a gap 2 are used for measuring measurement objects at a same serving cell frequency, or indicating that a gap 1 and a gap 2 are used for paging.

Example 2: The terminal indicates a measurement object or a measurement identity associated with at least one measurement gap to the network-side device, and when measurement gaps associated with a same measurement object or a same measurement identity conflict with each other, the measurement gaps can coexist.

For example, after the terminal receives a measurement configuration parameter and/or the measurement gap configuration parameter sent by the network-side device, such as a measurement configuration parameter and/or a measurement gap configuration parameter included in a radio resource control (Radio Resource Control, RRC) reconfiguration message, the terminal sends the indication information to the network-side device. The indication information includes the measurement object or the measurement identity associated with the measurement gap, and the measurement gaps may be the measurement gaps required by the terminal.

In some embodiments, the M measurement gaps include a MUSIM gap.

As described above, the M measurement gaps in this embodiment of this application are used for measuring a scenario of measurement objects located at the same frequency, including a MUSIM scenario. For example, in the MUSIM scenario, a network A can allocate a plurality of MUSIM gaps, for example, allocate one MUSIM gap to listen to a paging message from a network B, and allocate another MUSIM gap to measure an SSB before the paging message. In this case, the plurality of MUSIM gaps are used for a same frequency of the network B. In this case, if different MUSIM gaps conflict, the conflicting MUSIM gaps may coexist and do not need to be dropped. Therefore, the application scenario in this embodiment of this application may include the MUSIM scenario, that is, the M measurement gaps may include the MUSIM gap, but is not limited to the MUSIM scenario.

It should be noted that, among the measurement gaps configured for the terminal, in addition to the M measurement gaps that may conflict with each other, there may be another measurement gap that conflicts with at least one of the M measurement gaps, or there may be a measurement gap that conflicts with measurement gaps remained after the non-drop processing is performed on the M measurement gaps. The network-side device and the terminal are also required to have a consistent understanding of how the terminal is required to process the cases. For the cases, this embodiment of this application provides the following implementations.

Case 1:

In some embodiments, before the performing, by the terminal, first processing on the M measurement gaps based on the configuration parameter, the method further includes:

performing, by the terminal, second processing on a second measurement gap and the M measurement gaps in a case that the second measurement gap exists, where the second processing is drop processing performed based on a preset drop rule; and the second measurement gap is used for measuring a measurement object located at a second frequency and conflicts with at least one of the M measurement gaps; and
the performing, by the terminal, first processing on the M measurement gaps based on the configuration parameter includes:
performing, by the terminal based on the configuration parameter, the first processing on measurement gaps remained after the second processing is performed on the M measurement gaps.

In this case, if there is still a second measurement gap that conflicts with at least one of the M measurement gaps and is used for measuring a measurement object located at a second frequency, drop processing is first performed, based on the preset drop rule, on the second measurement gap and a measurement gap among the M measurement gaps that conflicts with the second measurement gap, and the non-drop processing is then performed on the measurement gap remained from the M measurement gaps based on the preset non-drop rule, that is, the drop processing is performed first and then the non-drop processing is performed.

For example, the preset drop rule may be a drop rule based on a priority, that is, a measurement gap with a relatively low priority is dropped and a measurement gap with a relatively high priority is remained.

As an example, as shown in FIG. 4, it is assumed that five measurement gaps are configured for the terminal, namely a gap 1, a gap 2, a gap 3, a gap 4, and a gap 5. In FIG. 4, schematic descriptions are provided by using only five measurement gaps as an example. It may be understood that the measurement gaps configured for the terminal are not limited to the five gaps shown in FIG. 4. A priority (represented by P) and a purpose of each measurement gap in FIG. 4 are as follows:

the gap 1: P=1, used for measuring an SSB of a MUSIM serving cell;
the gap 2: P=1, used for listening to a MUSIM paging message, where the measurement gap is an aperiodic gap;
the gap 3: P=5, used for measuring a frequency 1 of a network A (NW A);
the gap 4: P=8, used for measuring a frequency 2 of the network A; and
the gap 5: P=8, used for measuring a frequency 3 of the network A.

Among the five measurement gaps, the gap 1, the gap 2, and the gap 3 conflict with each other, the gap 1, the gap 2, and the gap 4 conflict with each other, and the gap 4 and the gap 5 conflict with each other.

Assuming that a smaller priority value leads to a higher priority, a conflict between a MUSIM gap and a Meas gap is first processed based on a drop rule that is based on a priority:

for a conflict between the gap 1 (or the gap 2) and the gap 3, the gap 3 is dropped;
for a conflict between the gap 1 (or the gap 2) and the gap 4, the gap 4 is dropped; and
for a conflict between the gap 4 and the gap 5, the conflict is resolved because the gap 4 is dropped.

Then a conflict between MUSIM gaps is processed based on the preset non-drop rule:
for a conflict between the gap 1 and the gap 2, the gap 1 and the gap 2 coexist.

Finally, the remained measurement gaps are the gap 5 and the merged gaps 1 and 2.

In some embodiments, after the performing, by the terminal, first processing on the M measurement gaps based on the configuration parameter, the method further includes:

measuring, by the terminal by using the measurement gaps remained after the first processing is performed on the M measurement gaps, a measurement object corresponding to the remained measurement gap.

Case 2:

In some embodiments, after the performing, by the terminal, first processing on the M measurement gaps based on the configuration parameter, the method further includes:

performing, by the terminal in a case that a third measurement gap exists, third processing on the third measurement gap and measurement gaps remained after the first processing is performed on the M measurement gaps, where the third processing is drop processing performed based on a preset drop rule; and the third measurement gap is used for measuring a measurement object located at a third frequency and conflicts with the measurement gaps remained after the first processing is performed on the M measurement gaps.

In this case, if there is still a third measurement gap that conflicts with at least one of the M measurement gaps and is used for measuring a measurement object located at a third frequency, non-drop processing may be performed on the M measurement gaps based on the preset non-drop rule, and then drop processing is performed, based on the preset drop rule, on the third measurement gap and the measurement gaps remained after the non-drop processing is performed on the M measurement gaps, that is, the non-drop processing is performed first and then the drop processing is performed.

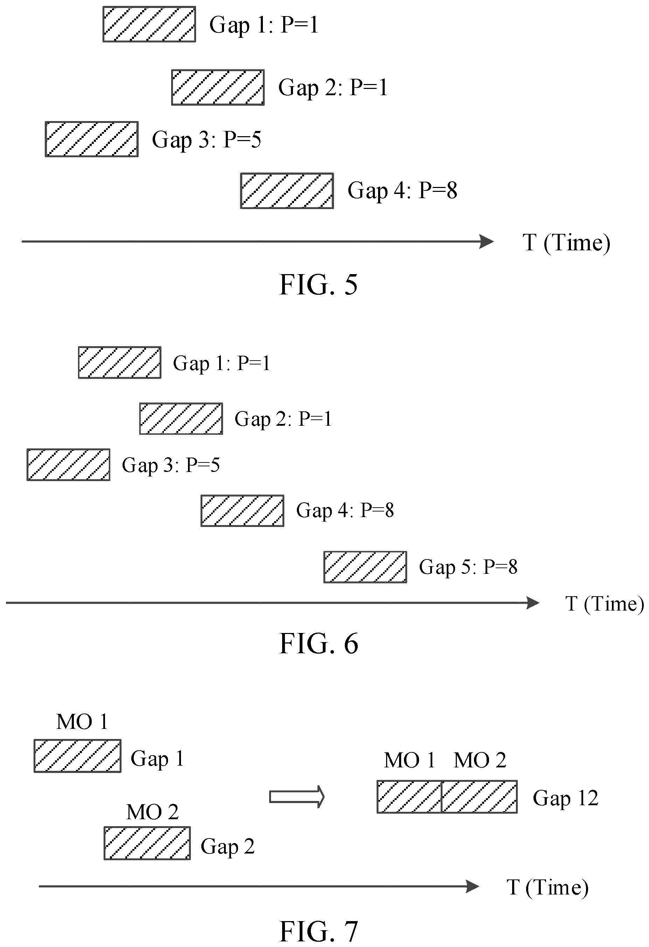

As an example, as shown in FIG. 5, it is assumed that four measurement gaps are configured for the terminal, namely a gap 1, a gap 2, a gap 3, and a gap 4. In FIG. 5, schematic descriptions are provided by using only four measurement gaps as an example. It may be understood that the measurement gaps configured for the terminal are not limited to the four gaps shown in FIG. 5. A priority (represented by P) and a purpose of each measurement gap in FIG. 5 are as follows:

the gap 1: P=1, used for measuring a frequency 1;
the gap 2: P=1, used for measuring a frequency 1;
the gap 3: P=5, used for measuring a frequency 1; and
the gap 4: P=8, used for measuring a frequency 2.

Among the four measurement gaps, the gap 1, the gap 2, and the gap 3 conflict with each other, and the gap 4 and the gap 1 conflict with each other.

Assuming that a smaller priority value leads to a higher priority, a conflict between the gap 1, the gap 2, and the gap 3 is first processed based on a non-drop rule that is based on a priority:

for the conflict between the gap 1, the gap 2, and the gap 3, the gap 1 and the gap 2 are remained and coexist.

Then a conflict between the gap 1 and the gap 4 is processed based on the drop rule that is based on a priority:

for the conflict between the gap 1 and the gap 4, the gap 4 is dropped.

Finally, the remained measurement gaps are the merged gaps 1 and 2.

In some embodiments, after the performing, by the terminal, first processing on the M measurement gaps based on the configuration parameter, the method further includes:

measuring, by the terminal by using measurement gaps remained after the first processing and the third processing are performed on the M measurement gaps, a measurement object corresponding to the remained measurement gap.

Case 3:

In some embodiments, after the performing, by the terminal, first processing on the M measurement gaps based on the configuration parameter, the method further includes:

performing, by the terminal based on the configuration parameter in a case that the N measurement gaps further include a fourth measurement gap, fourth processing on the fourth measurement gap and measurement gaps remained after the first processing is performed on the M measurement gaps, where the fourth processing is drop processing performed based on a preset drop rule; and the fourth measurement gap is used for measuring a measurement object located at the first frequency and conflicts with the measurement gaps remained after the first processing is performed on the M measurement gaps.

In this case, if after the non-drop processing is performed on the M measurement gaps, there is still a fourth measurement gap that measures a same frequency and conflicts with measurement gaps remained after the non-drop processing, drop processing may be performed, based on the preset drop rule, on the fourth measurement gap and the measurement gaps remained after the non-dropped processing is performed on the M measurement gaps, that is, the non-drop processing is performed first and then the drop processing is performed. The following provides a plurality of examples in this case.

Example 1

When a priority difference between any two of conflicting M measurement gaps is less than or equal to a non-drop threshold threshold1, the two conflicting measurement gaps can coexist (be non-dropped). The foregoing process is repeated, until the priority difference between any two of the M measurement gaps is greater than the non-drop threshold threshold1.

For measurement gaps after coexistence still conflicting with each other, the drop processing is performed according to a priority principle. For example, a gap conflict is processed from a gap with a highest priority and a measurement gap with a low priority is dropped. It should be noted that a coexistence gap in the foregoing process may participate in priority-based dropping as a whole gap.

Example 2

When a priority difference between any two of gaps whose priorities are less than (or greater than) a non-drop threshold threshold2 among conflicting M measurement gaps is less than or equal to a non-drop threshold threshold1, the two conflicting measurement gaps can coexist (be non-dropped). The foregoing process is repeated, until a priority difference between any two of gaps whose priorities are less than (or greater than) a non-drop threshold threshold2 among the M measurement gaps is greater than the non-drop threshold threshold1.

For measurement gaps after coexistence still conflicting with each other, the drop processing is performed according to a priority principle. For example, a gap conflict is processed from a gap with a highest priority and a measurement gap with a low priority is dropped. It should be noted that a coexistence gap in the foregoing process may participate in priority-based dropping as a whole gap.

Example 3

When any two of conflicting M measurement gaps has a same non-drop identifier (that is, a same coexistence identifier), the two conflicting measurement gaps can coexist. The foregoing process is repeated, until all conflicting measurement gaps coexist. For measurement gaps after coexistence still conflicting with each other, the drop processing is performed according to a priority principle. For example, a gap conflict is processed from a gap with a highest priority and a measurement gap with a low priority is dropped. It should be noted that a coexistence gap in the foregoing process may participate in priority-based dropping as a whole gap.

As shown in FIG. 6, it is assumed that five measurement gaps are configured for the terminal, namely a gap 1, a gap 2, a gap 3, a gap 4, and a gap 5. In FIG. 6, schematic descriptions are provided by using only five measurement gaps as an example. It may be understood that the measurement gaps configured for the terminal are not limited to the five gaps shown in FIG. 6. A priority (represented by P) and a purpose of each measurement gap in FIG. 6 are as follows:

the gap 1: P=1, used for measuring a frequency 1;
the gap 2: P=1, used for measuring a frequency 1;
the gap 3: P=5, used for measuring a frequency 1;
the gap 4: P=8, used for measuring a frequency 1; and
the gap 5: P=8, used for measuring a frequency 1.

Among the five measurement gaps, the gap 1, the gap 2, and the gap 3 conflict with each other, the gap 1, the gap 2, and the gap 4 conflict with each other, and the gap 4 and the gap 5 conflict with each other.

Assuming that a smaller priority value leads to a higher priority, the preset non-drop rule is: When priorities of measurement gaps are equal (that is, the non-drop threshold threshold1 is equal to 0), the measurement gaps are non-dropped (that is, coexist).

According to the preset non-drop rule, the gap 1 and the gap 2 coexist, and the gap 4 and the gap 5 coexist. Then based on a priority method, the gap 1, the gap 2, and the gap 5 are finally remained.

Assuming that a smaller priority value leads to a higher priority, the preset non-drop rule is: When priorities of measurement gaps whose priorities are less than 10 (that is, the non-drop threshold threshold2 is equal to 10) are equal (that is, the non-drop threshold threshold1 is equal to 0), the measurement gaps are non-dropped (that is, coexist).

According to the preset non-drop rule, the gap 1 and the gap 2 coexist, and the gap 4 and the gap 5 coexist. Then based on a priority method, the gap 1, the gap 2, and the gap 5 are finally remained.

Example 4

A particular identifier (or a special identifier) is set for a gap pattern, and a measurement gap with the particular identifier may coexist when conflicting with any measurement gap. It may be understood that the particular identifier is a non-drop identifier (or a coexistence identifier). The particular identifier may be represented by a bit or a bitmap.

For example, for a plurality of gap patterns (for example, N gap patterns), a bitmap (bitmap) method may be used to set an (N-1)-bit bitmap for each gap pattern. For example, there are 4 gap patterns. It is assumed that a bitmap of a gap 1 may be (0,0,1), where "1" is a specific identifier, that is, "1" represents coexistence during a conflict, and "0" represents dropping based on a priority during a conflict. Then, the gap 1 and a gap 4 may coexist when the gap 1 conflicts with the gap 4, and the gap 1 and a gap 2 (or a gap 3) are dropped based on a priority when the gap 1 conflicts with the gap 2 (or the gap 3).

The bitmap may be provided by the terminal to the network-side device, and the network-side device may reallocate the bitmap based on a case and deliver the bitmap to the terminal.

For another example, for N gap patterns, one bit (bit) may be allocated to each gap pattern. For example, "0" represents dropping based on a priority during a conflict with any other measurement gap, and "1" represents using the coexistence method during a conflict with any other measurement gap, that is, "1" is a specific identifier.

Similarly, the bit may be reported by the terminal to the network-side device, and the network-side device may or may not modify the bit based on a case, and then deliver the bit to the terminal.

For measurement gaps after coexistence still conflicting with each other, the drop processing is performed according to a priority principle. For example, a gap conflict is processed from a gap with a highest priority and a measurement gap with a low priority is dropped. It should be noted that a coexistence gap in the foregoing process may participate in priority-based dropping as a whole gap. In some embodiments, after the performing, by the terminal, first processing on the M measurement gaps based on the configuration parameter, the method further includes:
measuring, by the terminal by using measurement gaps remained after the first processing and the fourth processing are performed on the M measurement gaps, a measurement object corresponding to the remained measurement gap.

In addition, the following manner of processing a measurement object after conflicting measurement gaps coexist is provided:
One gap pattern may be used for measuring a plurality of measurement objects, and each specific measurement gap measuring only one measurement object is used as a prerequisite. When a plurality of measurement gaps coexist and then are merged into one measurement gap, the measurement gap obtained after the merging needs to measure a measurement object corresponding to each measurement gap participating in the coexistence.

For example, as shown in FIG. 7, a gap 1 and a gap 2 conflict with each other, the gap 1 is used for measuring an MO 1, and the gap 2 is used for measuring an MO 2. The gap 1 and the gap 2 coexist and then are merged into one measurement gap (named as a gap 12), and the gap 12 needs to measure the MO 1 and the MO 2. It may be understood that, in FIG. 7, schematic descriptions are provided by using only two measurement gaps as an example, and merging the measurement gaps after coexistence is not limited to the two gaps shown in FIG. 7.

To sum up, in this embodiment of this application, the terminal sends the indication information of the conflicting measurement gaps to the network-side device, and the network-side device sends the configuration parameter, so that the terminal can perform the non-drop processing on the conflicting measurement gaps based on the configuration parameter by using the preset non-drop rule. Through the foregoing process, the terminal and the network-side device can be enabled to have a consistent understanding of processing of the measurement gap conflict, so that the terminal can be enabled to properly process the measurement gap conflict. The non-drop processing is performed on the conflicting measurement gaps, so that utilization efficiency of the measurement gap can be further increased, and a measurement delay can be reduced, thereby improving measurement performance.

The method for processing a measurement gap conflict provided in the embodiments of this application may be executed by an apparatus for processing a measurement gap conflict. In this embodiment of this application, the apparatus for processing a measurement gap conflict executing the method for processing a measurement gap conflict is used as an example to describe the apparatus for processing a measurement gap conflict provided in embodiments of this application.

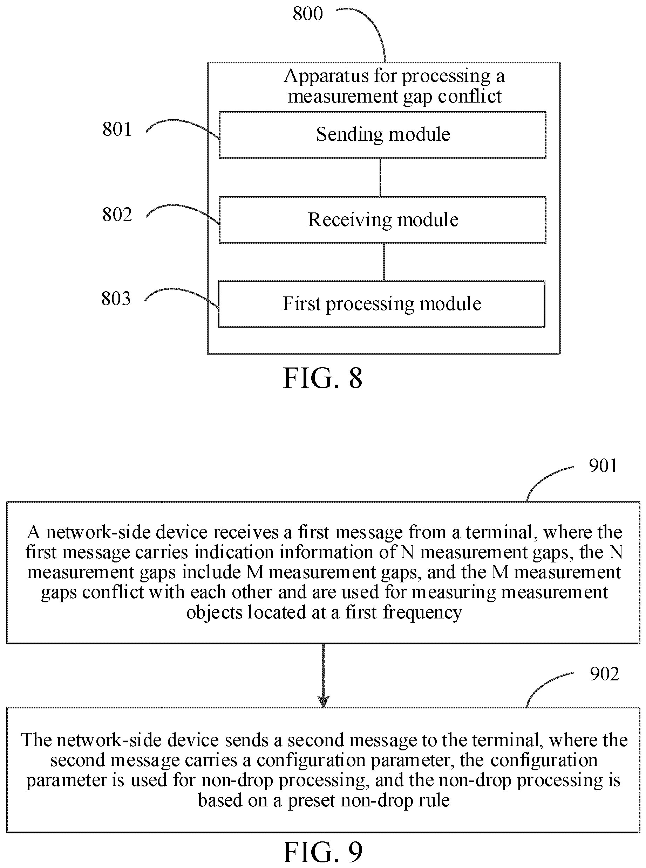

FIG. 8 is a diagram 1 of a structure of an apparatus for processing a measurement gap conflict according to an embodiment of this application. The apparatus for processing a measurement gap conflict can be applied to a terminal. As shown in FIG. 8, the apparatus 800 for processing a measurement gap conflict includes:

a sending module 801, configured to send a first message to a network-side device, where the first message carries indication information of N measurement gaps, the N measurement gaps include M measurement gaps, the M measurement gaps conflict with each other and are used for measuring measurement objects located at a first frequency, and both N and M are integers greater than or equal to 2;

a receiving module 802, configured to receive a second message from the network-side device, where the second message carries a configuration parameter; and

a first processing module 803, configured to perform first processing on the M measurement gaps based on the configuration parameter, where the first processing is non-drop processing performed based on a preset non-drop rule.

Optionally, the apparatus 800 for processing a measurement gap conflict further includes:

a second processing module, configured to perform second processing on a second measurement gap and the M measurement gaps in a case that the second measurement gap exists, where the second processing is drop processing performed based on a preset drop rule; and the second measurement gap is used for measuring a measurement object located at a second frequency and conflicts with at least one of the M measurement gaps.

The first processing module 803 is specifically configured to:

perform, based on the configuration parameter, the first processing on measurement gaps remained after the second processing is performed on the M measurement gaps.

Optionally, the apparatus 800 for processing a measurement gap conflict further includes:

a third processing module, configured to perform, in a case that a third measurement gap exists, third processing on the third measurement gap and measurement gaps remained after the first processing is performed on the M measurement gaps, where the third processing is drop processing performed based on a preset drop rule; and the third measurement gap is used for measuring a measurement object located at a third frequency and conflicts with the measurement gaps remained after the first processing is performed on the M measurement gaps.

Optionally, the apparatus 800 for processing a measurement gap conflict further includes:

a fourth processing module, configured to perform, based on the configuration parameter in a case that the N measurement gaps further include a fourth measurement gap, fourth processing on the fourth measurement gap and measurement gaps remained after the first processing is performed on the M measurement gaps, where the fourth processing is drop processing performed based on a preset drop rule; and the fourth measurement gap is used for measuring a measurement object located at the first frequency and conflicts with the measurement gaps remained after the first processing is performed on the M measurement gaps.

Optionally, the apparatus 800 for processing a measurement gap conflict further includes:

a first measurement module, configured to measure, by using the measurement gaps remained after the first processing is performed on the M measurement gaps, a measurement object corresponding to the remained measurement gap.

Optionally, the apparatus 800 for processing a measurement gap conflict further includes:

a second measurement module, configured to measure, by using measurement gaps remained after the first processing and the third processing are performed on the M measurement gaps, a measurement object corresponding to the remained measurement gap.

Optionally, the apparatus 800 for processing a measurement gap conflict further includes:

a third measurement module, configured to measure, by using measurement gaps remained after the first processing and the fourth processing are performed on the M measurement gaps, a measurement object corresponding to the remained measurement gap.

Optionally, the configuration parameter includes at least one of a non-drop threshold, a non-drop identifier, a priority configuration parameter of a measurement gap, and a purpose configuration parameter of the measurement gap; and

the preset non-drop rule includes at least one of the following:

performing non-drop processing on a measurement gap whose priority configuration parameter is a first preset value;
performing non-drop processing on measurement gaps between which a priority configuration parameter difference is less than or equal to a second preset value;
performing non-drop processing on a measurement gap whose priority configuration parameter is less than or equal to a third preset value;
performing non-drop processing on a measurement gap whose priority configuration parameter is greater than or equal to a fourth preset value;
performing non-drop processing on measurement gaps with a same non-drop identifier;
performing non-drop processing on a first measurement gap with a non-drop identifier and a second measurement gap conflicting with the first measurement gap;
performing non-drop processing on measurement gaps with a same purpose configuration parameter;
performing non-drop processing on a measurement gap whose priority is a first non-drop threshold;
performing non-drop processing on a measurement gap whose priority is less than or equal to a second non-drop threshold;

performing non-drop processing on a measurement gap whose priority is greater than or equal to a third non-drop threshold;

performing non-drop processing on measurement gaps between which a priority difference is less than or equal to a fourth non-drop threshold;

performing non-drop processing on a measurement gap whose priority configuration parameter is a fifth non-drop threshold;

performing non-drop processing on measurement gaps between which a priority configuration parameter difference is less than or equal to a sixth non-drop threshold;

performing non-drop processing on a measurement gap whose priority configuration parameter is less than or equal to a seventh non-drop threshold; and

performing non-drop processing on a measurement gap whose priority configuration parameter is greater than or equal to an eighth non-drop threshold.

Optionally, the indication information of the N measurement gaps includes at least one of the following:

frequency indication information of the N measurement gaps;
purpose indication information of the N measurement gaps;
indication information of measurement objects associated with the N measurement gaps;
indication information of measurement identities of the N measurement gaps;
length indication information of the N measurement gaps; and
period indication information of the N measurement gaps.

Optionally, the M measurement gaps meet any one of the following conditions:

a time domain interval value between any two of the M measurement gaps is less than or equal to a fifth preset value; and
a time domain coincidence degree between any two of the M measurement gaps is less than or equal to a sixth preset value.

Optionally, the sixth preset value is determined by using the following formulas:

[MGL (Gap 1) - X] $\geq$ minimum MGL (FR1 or FR2), and [MGL (Gap 2) - X] $\geq$ minimum MGL (FR1 or FR2), where X represents the sixth preset value, MGL (Gap 1) and MGL (Gap 2) respectively represent minimum gap lengths of two measurement gaps, and minimum MGL (FR1 or FR2) represents minimum gap lengths in two frequency ranges.

Optionally, the M measurement gaps include a plurality of multi-universal subscriber identity module MUSIM gaps.

To sum up, in this embodiment of this application, the terminal sends the indication information of the conflicting measurement gaps to the network-side device, and the network-side device sends the configuration parameter, so that the terminal can perform the non-drop processing on the conflicting measurement gaps based on the configuration parameter by using the preset non-drop rule. Through the foregoing process, the terminal and the network-side device can be enabled to have a consistent understanding of processing of the measurement gap conflict, so that the terminal can be enabled to properly process the measurement gap conflict. The non-drop processing is performed on the conflicting measurement gaps, so that utilization efficiency of the measurement gap can be further increased, and a measurement delay can be reduced, thereby improving measurement performance.

The apparatus 800 for processing a measurement gap conflict in this embodiment of this application may be an electronic device, for example, an electronic device with an operating system, or may be a component in an electronic device, for example, an integrated circuit or chip. The electronic device may be a terminal, or another device other than the terminal. For example, the terminal may include but is not limited to the foregoing listed types of the terminal 11, and the another device may be a server, a network attached storage (Network Attached Storage, NAS), or the like. This is not specifically limited in this embodiment of this application.

The apparatus 800 for processing a measurement gap conflict provided in this embodiment of this application can implement each process implemented by the method embodiments in FIG. 2 to FIG. 7 and achieve the same technical effects. To avoid repetition, details are not described herein again.

FIG. 9 is a flowchart 2 of a method for processing a measurement gap conflict according to an embodiment of this application. As shown in FIG. 9, the method for processing a measurement gap conflict includes the following steps.

Step 901: A network-side device receives a first message from a terminal, where the first message carries indication information of N measurement gaps, the N measurement gaps include M measurement gaps, the M measurement gaps conflict with each other and are used for measuring measurement objects located at a first frequency, and both N and M are integers greater than or equal to 2.

Step 902: The network-side device sends a second message to the terminal, where the second message carries a configuration parameter, the configuration parameter is used for non-drop processing, and the non-drop processing is based on a preset non-drop rule.

As an example, the network-side device may determine the configuration parameter based on the preset non-drop rule. Herein, the configuration parameter may include a measurement gap configuration parameter, and may also include a non-drop indication parameter.

Optionally, the configuration parameter includes at least one of a non-drop threshold, a non-drop identifier, a priority configuration parameter of a measurement gap, and a purpose configuration parameter of the measurement gap; and

the preset non-drop rule includes at least one of the following:

performing non-drop processing on a measurement gap whose priority configuration parameter is a first preset value;

performing non-drop processing on measurement gaps between which a priority configuration parameter difference is less than or equal to a second preset value;

performing non-drop processing on a measurement gap whose priority configuration parameter is less than or equal to a third preset value;

performing non-drop processing on a measurement gap whose priority configuration parameter is greater than or equal to a fourth preset value;

performing non-drop processing on measurement gaps with a same non-drop identifier;

performing non-drop processing on a first measurement gap with a non-drop identifier and a second measurement gap conflicting with the first measurement gap;

performing non-drop processing on measurement gaps with a same purpose configuration parameter;

performing non-drop processing on a measurement gap whose priority is a first non-drop threshold;

performing non-drop processing on a measurement gap whose priority is less than or equal to a second non-drop threshold;

performing non-drop processing on a measurement gap whose priority is greater than or equal to a third non-drop threshold;

performing non-drop processing on measurement gaps between which a priority difference is less than or equal to a fourth non-drop threshold;

performing non-drop processing on a measurement gap whose priority configuration parameter is a fifth non-drop threshold;

performing non-drop processing on measurement gaps between which a priority configuration parameter difference is less than or equal to a sixth non-drop threshold;

performing non-drop processing on a measurement gap whose priority configuration parameter is less than or equal to a seventh non-drop threshold; and

performing non-drop processing on a measurement gap whose priority configuration parameter is greater than or equal to an eighth non-drop threshold.

Optionally, the indication information of the N measurement gaps includes at least one of the following:

frequency indication information of the N measurement gaps;
purpose indication information of the N measurement gaps;
indication information of measurement objects associated with the N measurement gaps;
indication information of measurement identities of the N measurement gaps;
length indication information of the N measurement gaps; and
period indication information of the N measurement gaps.

Optionally, the M measurement gaps meet any one of the following conditions:

a time domain interval value between any two of the M measurement gaps is less than or equal to a fifth preset value; and

a time domain coincidence degree between any two of the M measurement gaps is less than or equal to a sixth preset value.

Optionally, the sixth preset value is determined by using the following formulas:

[MGL (Gap 1) - X] ≥ minimum MGL (FR1 or FR2), and [MGL (Gap 2) - X] ≥ minimum MGL (FR1 or FR2), where X represents the sixth preset value, MGL (Gap 1) and MGL (Gap 2) respectively represent minimum gap lengths of two measurement gaps, and minimum MGL (FR1 or FR2) represents minimum gap lengths in two frequency ranges.

Optionally, the M measurement gaps include a plurality of multi-universal subscriber identity module MUSIM gaps.

To sum up, in this embodiment of this application, the terminal sends the indication information of the conflicting measurement gaps to the network-side device, and the network-side device sends the configuration parameter, so that the terminal can perform the non-drop processing on the conflicting measurement gaps based on the configuration parameter by using the preset non-drop rule. Through the foregoing process, the terminal and the network-side device can be enabled to have a consistent understanding of processing of the measurement gap conflict, so that the terminal can be enabled to properly process the measurement gap conflict. The non-drop processing is performed on the conflicting measurement gaps, so that utilization efficiency of the measurement gap can be further increased, and a measurement delay can be reduced, thereby improving measurement performance.

For relevant descriptions of this embodiment of this application, refer to the method embodiments of FIG. 2 to FIG. 7, and the same technical effects can be achieved. To avoid repetition, details are not described.

The method for processing a measurement gap conflict provided in the embodiments of this application may be executed by an apparatus for processing a measurement gap conflict. In this embodiment of this application, the apparatus for processing a measurement gap conflict executing the method for processing a measurement gap conflict is used as an example to describe the apparatus for processing a measurement gap conflict provided in embodiments of this application.

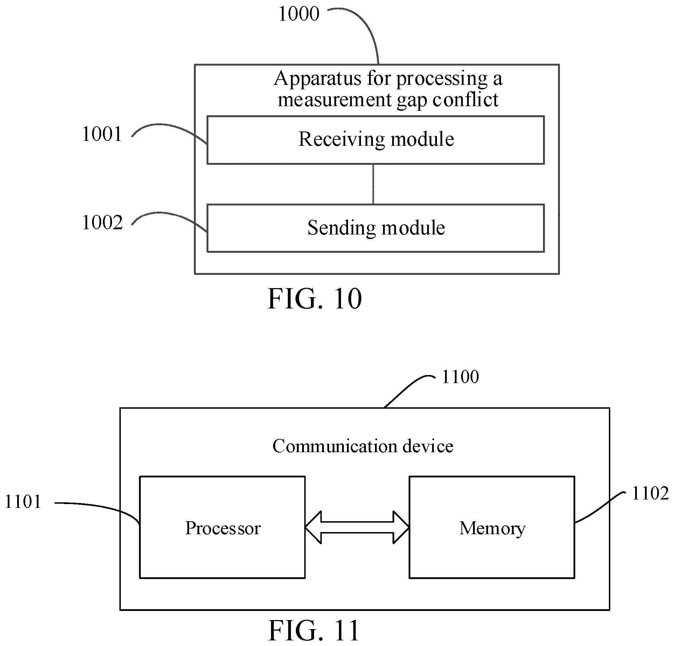

FIG. 10 is a diagram 2 of a structure of an apparatus for processing a measurement gap conflict according to an embodiment of this application. The apparatus for processing a measurement gap conflict can be applied to a network-side device. As shown in FIG. 10, the apparatus 1000 for processing a measurement gap conflict includes:

a receiving module 1001, configured to receive a first message from a terminal, where the first message carries indication information of N measurement gaps, the N measurement gaps include M measurement gaps, the M measurement gaps conflict with each other and are used for measuring measurement objects located at a first frequency, and both N and M are integers greater than or equal to 2; and

a sending module 1002, configured to send a second message to the terminal, where the second message carries a configuration parameter, the configuration parameter is used for non-drop processing, and the non-drop processing is based on a preset non-drop rule.

Optionally, the configuration parameter includes at least one of a non-drop threshold, a non-drop identifier, a priority configuration parameter of a measurement gap, and a purpose configuration parameter of the measurement gap; and

the preset non-drop rule includes at least one of the following:

performing non-drop processing on a measurement gap whose priority configuration parameter is a first preset value;

performing non-drop processing on measurement gaps between which a priority configuration parameter difference is less than or equal to a second preset value;

performing non-drop processing on a measurement gap whose priority configuration parameter is less than or equal to a third preset value;

performing non-drop processing on a measurement gap whose priority configuration parameter is greater than or equal to a fourth preset value;

performing non-drop processing on measurement gaps with a same non-drop identifier;

performing non-drop processing on a first measurement gap with a non-drop identifier and a second measurement gap conflicting with the first measurement gap;

performing non-drop processing on measurement gaps with a same purpose configuration parameter;

performing non-drop processing on a measurement gap whose priority is a first non-drop threshold;

performing non-drop processing on a measurement gap whose priority is less than or equal to a second non-drop threshold;

performing non-drop processing on a measurement gap whose priority is greater than or equal to a third non-drop threshold;

performing non-drop processing on measurement gaps between which a priority difference is less than or equal to a fourth non-drop threshold;

performing non-drop processing on a measurement gap whose priority configuration parameter is a fifth non-drop threshold;

performing non-drop processing on measurement gaps between which a priority configuration parameter difference is less than or equal to a sixth non-drop threshold;

performing non-drop processing on a measurement gap whose priority configuration parameter is less than or equal to a seventh non-drop threshold; and

performing non-drop processing on a measurement gap whose priority configuration parameter is greater than or equal to an eighth non-drop threshold.

Optionally, the indication information of the N measurement gaps includes at least one of the following:

frequency indication information of the N measurement gaps;
purpose indication information of the N measurement gaps;
indication information of measurement objects associated with the N measurement gaps;
indication information of measurement identities of the N measurement gaps;
length indication information of the N measurement gaps; and
period indication information of the N measurement gaps.

Optionally, the M measurement gaps meet any one of the following conditions:

a time domain interval value between any two of the M measurement gaps is less than or equal to a fifth preset value; and
a time domain coincidence degree between any two of the M measurement gaps is less than or equal to a sixth preset value.

Optionally, the sixth preset value is determined by using the following formulas:

[MGL (Gap 1) - X] $\geq$ minimum MGL (FR1 or FR2), and [MGL (Gap 2) - X] $\geq$ minimum MGL (FR1 or FR2), where X represents the sixth preset value, MGL (Gap 1) and MGL (Gap 2) respectively represent minimum gap lengths of two measurement gaps, and minimum MGL (FR1 or FR2) represents minimum gap lengths in two frequency ranges.

Optionally, the M measurement gaps include a plurality of multi-universal subscriber identity module MUSIM gaps.

To sum up, in this embodiment of this application, the terminal sends the indication information of the conflicting measurement gaps to the network-side device, and the network-side device sends the configuration parameter, so that the terminal can perform the non-drop processing on the conflicting measurement gaps based on the configuration parameter by using the preset non-drop rule. Through the foregoing process, the terminal and the network-side device can be enabled to have a consistent understanding of processing of the measurement gap conflict, so that the terminal can be enabled to properly process the measurement gap conflict. The non-drop processing is performed on the conflicting measurement gaps, so that utilization efficiency of the measurement gap can be further increased, and a measurement delay can be reduced, thereby improving measurement performance.

The apparatus 1000 for processing a measurement gap conflict in this embodiment of this application may be an electronic device, for example, an electronic device with an operating system, or may be a component in an electronic device, for example, an integrated circuit or chip. The electronic device may be a terminal, or another device other than the terminal. For example, the terminal may include but is not limited to the foregoing listed types of the terminal 11, and the another device may be a server, a network attached storage (Network Attached Storage, NAS), or the like. This is not specifically limited in this embodiment of this application.

The apparatus 1000 for processing a measurement gap conflict provided in this embodiment of this application can implement each process implemented by the method embodiment in FIG. 9 and achieve the same technical effects. To avoid repetition, details are not described herein again.

Optionally, as shown in FIG. 11, an embodiment of this application further provides a communication device 1100, including a processor 1101 and a memory 1102. The memory 1102 stores a program or instructions capable of running on the processor 1101. For example, when the communication device 1100 is a terminal, when the program or the instructions are executed by the processor 1101, the steps of the foregoing embodiment of the method for processing a measurement gap conflict are implemented, with the same technical effects achieved. When the communication device 1100 is a network-side device, the program or the instructions are executed by the processor 1101 to implement the steps in the embodiment of the method for processing a measurement gap conflict, and the same technical effects can be achieved. To avoid repetition, details are not described herein again.

An embodiment of this application further provides a terminal, including a processor and a communication interface. The communication interface is configured to: send a first message to a network-side device, where the first message carries indication information of N measurement gaps, the N measurement gaps include M measurement gaps, the M measurement gaps conflict with each other and are used for measuring measurement objects located at a first frequency, and both N and M are integers greater than or equal to 2; and receive a second message from the network-side device, where the second message carries a configuration parameter. The processor is configured to: perform first processing on the M measurement gaps based on the configuration parameter, where the first processing is non-drop processing performed based on a preset non-drop rule. The terminal embodiment corresponds to the foregoing embodiment of the method for processing a measurement gap conflict. Implementation processes and implementations of the foregoing method embodiment are all applicable to the terminal embodiment, and the same technical effects can be achieved.

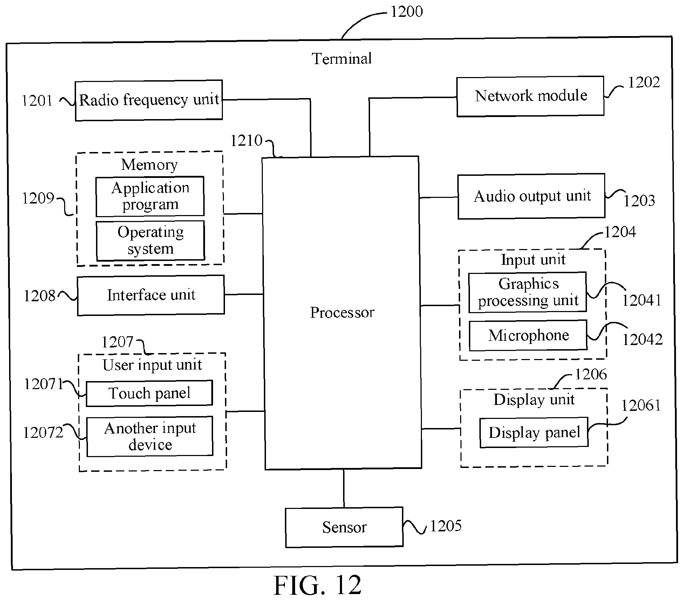

Specifically, FIG. 12 is a schematic diagram of a hardware structure of a terminal according to an embodiment of this application.

The terminal 1200 includes, but is not limited to: at least part of components such as a radio frequency unit 1201, a network module 1202, an audio output unit 1203, an input unit 1204, a sensor 1205, a display unit 1206, a user input unit 1207, an interface unit 1208, a memory 1209, a processor 1210, and the like.

A person skilled in the art may understand that, the terminal 1200 may further include a power supply (for example, a battery) for supplying power to the components. The power supply may be logically connected to the processor 1210 by a power management system, thereby implementing functions such as charging, discharging, and power consumption management through the power management system. The terminal structure shown in FIG. 12 constitutes no limitation on the terminal. The terminal may include more or fewer components than those shown in the figure, combine some components, or have different component arrangements. Details are not described herein.

It should be understood that in this embodiment of this application, the input unit 1204 may include a graphics processing unit (Graphics Processing Unit, GPU) 12041 and a microphone 12042. The graphics processing unit 12041 processes image data of a static picture or a video obtained by an image capture apparatus (for example, a camera) in a video capture mode or an image capture mode. The display unit 1206 may include a display panel 12061. The display panel 12061 may be configured by using a liquid crystal display, an organic light-emitting diode, or the like. The user input unit 1207 includes at least one of a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a functional button (such as a volume control button or a power on/off button), a trackball, a mouse, and a joystick. Details are not described herein.

In this embodiment of this application, after receiving downlink data from a network-side device, the radio frequency unit 1201 may transmit the downlink data to the processor 1210 for processing. In addition, the radio frequency unit 1201 may send uplink data to a network-side device. Usually, the radio frequency unit 1201 includes but is not limited to an antenna, an amplifier, a transceiver, a coupler, a low noise amplifier, a duplexer, and the like.

The memory 1209 may be configured to store a software program or an instruction and various data. The memory 1209 may mainly include a first storage area for storing a program or an instruction and a second storage area for storing data. The first storage area may store an operating system, and an application program or an instruction required by at least one function (for example, a sound playing function or an image playing function). In addition, the memory 1209 may be a volatile memory or a non-volatile memory, or the memory 1209 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1209 in this embodiment of this application includes, but is not limited to, these memories and any other suitable types of memories.

The processor 1210 may include one or more processing units. Optionally, an application processor and a modem processor are integrated into the processor 1210, the application processor mainly processes operations related to an operating system, a user interface, an application program, and the like, and the modem processor mainly processes a wireless communication signal, for example, a baseband processor. It may be understood that the foregoing modem processor may alternatively not be integrated into the processor 1210.

The radio frequency unit 1201 is configured to:

send a first message to a network-side device, where the first message carries indication information of N measurement gaps, the N measurement gaps include M measurement gaps, the M measurement gaps conflict with each other and are used for measuring measurement objects located at a first frequency, and both N and M are integers greater than or equal to 2; and

receive a second message from the network-side device, where the second message carries a configuration parameter.

The processor 1210 is configured to:

perform first processing on the M measurement gaps based on the configuration parameter, where the first processing is non-drop processing performed based on a preset non-drop rule.

In this embodiment of this application, the terminal sends the indication information of the conflicting measurement gaps to the network-side device, and the network-side device sends the configuration parameter, so that the terminal can perform the non-drop processing on the conflicting measurement gaps based on the configuration parameter by using the preset non-drop rule. Through the foregoing process, the terminal and the network-side device can be enabled to have a consistent understanding of processing of the measurement gap conflict, so that the terminal can be enabled to properly process the measurement gap conflict. The non-drop processing is performed on the conflicting measurement gaps, so that utilization efficiency of the measurement gap can be further increased, and a measurement delay can be reduced, thereby improving measurement performance.

Optionally, the processor 1210 is further configured to:

perform second processing on a second measurement gap and the M measurement gaps in a case that the second measurement gap exists, where the second processing is drop processing performed based on a preset drop rule; the second measurement gap is used for measuring a measurement object located at a second frequency and conflicts with at least one of the M measurement gaps; and

perform, based on the configuration parameter, the first processing on measurement gaps remained after the second processing is performed on the M measurement gaps.

Optionally, the processor 1210 is further configured to:

perform, in a case that a third measurement gap exists, third processing on the third measurement gap and measurement gaps remained after the first processing is performed on the M measurement gaps, where the third processing is drop processing performed based on a preset drop rule; and the third measurement gap is used for measuring a measurement object located at a third frequency and conflicts with the measurement gaps remained after the first processing is performed on the M measurement gaps.

Optionally, the processor 1210 is further configured to:

perform, based on the configuration parameter in a case that the N measurement gaps further include a fourth measurement gap, fourth processing on the fourth measurement gap and measurement gaps remained after the first processing is performed on the M measurement gaps, where the fourth processing is drop processing performed based on a preset drop rule; and the fourth measurement gap is used for measuring a measurement object located at the first frequency and conflicts with the measurement gaps remained after the first processing is performed on the M measurement gaps.

Optionally, the processor 1210 is further configured to:

measure, by using the measurement gaps remained after the first processing is performed on the M measurement gaps, a measurement object corresponding to the remained measurement gap.

Optionally, the processor 1210 is further configured to:

measure, by using measurement gaps remained after the first processing and the third processing are performed on the M measurement gaps, a measurement object corresponding to the remained measurement gap.

Optionally, the processor 1210 is further configured to:

measure, by using measurement gaps remained after the first processing and the fourth processing are performed on the M measurement gaps, a measurement object corresponding to the remained measurement gap.

Optionally, the configuration parameter includes at least one of a non-drop threshold, a non-drop identifier, a priority configuration parameter of a measurement gap, and a purpose configuration parameter of the measurement gap; and

the preset non-drop rule includes at least one of the following:

performing non-drop processing on a measurement gap whose priority configuration parameter is a first preset value;

performing non-drop processing on measurement gaps between which a priority configuration parameter difference is less than or equal to a second preset value;

performing non-drop processing on a measurement gap whose priority configuration parameter is less than or equal to a third preset value;

performing non-drop processing on a measurement gap whose priority configuration parameter is greater than or equal to a fourth preset value;

performing non-drop processing on measurement gaps with a same non-drop identifier;

performing non-drop processing on a first measurement gap with a non-drop identifier and a second measurement gap conflicting with the first measurement gap;

performing non-drop processing on measurement gaps with a same purpose configuration parameter;

performing non-drop processing on a measurement gap whose priority is a first non-drop threshold;

performing non-drop processing on a measurement gap whose priority is less than or equal to a second non-drop threshold;

performing non-drop processing on a measurement gap whose priority is greater than or equal to a third non-drop threshold;

performing non-drop processing on measurement gaps between which a priority difference is less than or equal to a fourth non-drop threshold;

performing non-drop processing on a measurement gap whose priority configuration parameter is a fifth non-drop threshold;

performing non-drop processing on measurement gaps between which a priority configuration parameter difference is less than or equal to a sixth non-drop threshold;

performing non-drop processing on a measurement gap whose priority configuration parameter is less than or equal to a seventh non-drop threshold; and

performing non-drop processing on a measurement gap whose priority configuration parameter is greater than or equal to an eighth non-drop threshold.

Optionally, the indication information of the N measurement gaps includes at least one of the following:

frequency indication information of the N measurement gaps;

purpose indication information of the N measurement gaps;

indication information of measurement objects associated with the N measurement gaps;

indication information of measurement identities of the N measurement gaps;

length indication information of the N measurement gaps; and

period indication information of the N measurement gaps.

Optionally, the M measurement gaps meet any one of the following conditions:

a time domain interval value between any two of the M measurement gaps is less than or equal to a fifth preset value; and

a time domain coincidence degree between any two of the M measurement gaps is less than or equal to a sixth preset value.

Optionally, the sixth preset value is determined by using the following formulas:

[MGL (Gap 1) - X] $\geq$ minimum MGL (FR1 or FR2), and [MGL (Gap 2) - X] $\geq$ minimum MGL (FR1 or FR2), where X represents the sixth preset value, MGL (Gap 1) and MGL (Gap 2) respectively represent minimum gap lengths of two measurement gaps, and minimum MGL (FR1 or FR2) represents minimum gap lengths in two frequency ranges.

Optionally, the M measurement gaps include a plurality of multi-universal subscriber identity module MUSIM gaps.

To sum up, in this embodiment of this application, the terminal sends the indication information of the conflicting measurement gaps to the network-side device, and the network-side device sends the configuration parameter, so that the terminal can perform the non-drop processing on the conflicting measurement gaps based on the configuration parameter by using the preset non-drop rule. Through the foregoing process, the terminal and the network-side device can be enabled to have a consistent understanding of processing of the measurement gap conflict, so that the terminal can be enabled to properly process the measurement gap conflict. The non-drop processing is performed on the conflicting measurement gaps, so that utilization efficiency of the measurement gap can be further increased, and a measurement delay can be reduced, thereby improving measurement performance.

An embodiment of this application further provides a network-side device, including a processor and a communication interface. The communication interface is configured to: receive a first message from a terminal, where the first message carries indication information of N measurement gaps, the N measurement gaps include M measurement gaps, the M measurement gaps conflict with each other and are used for measuring measurement objects located at a first frequency, and both N and M are integers greater than or equal to 2; and send a second message to the terminal, where the second message carries a configuration parameter, the configuration parameter is used for non-drop processing, and the non-drop processing is based on a preset non-drop rule. The network-side device embodiment corresponds to the foregoing embodiment of the method for processing a measurement gap conflict. Various implementation processes and implementations in the foregoing method embodiment are applicable to the network-side device embodiment, and can achieve the same technical effects.

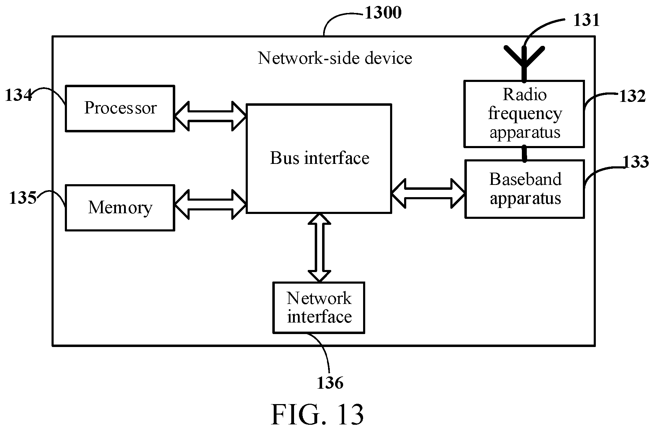

Specifically, an embodiment of this application further provides a network-side device. As shown in FIG. 13, the network-side device 1300 includes: an antenna 131, a radio frequency apparatus 132, a baseband apparatus 133, a processor 134, and a memory 135. The antenna 131 is connected to the radio frequency apparatus 132. In an uplink direction, the radio frequency apparatus 132 receives information by using the antenna 131, and sends the received information to the baseband apparatus 133 for processing. In a downlink direction, the baseband apparatus 133 processes information that needs to be sent, and sends processed information to the radio frequency apparatus 132. The radio frequency apparatus 132 processes the received information, and sends processed information by using the antenna 131.

In the foregoing embodiment, the method executed by the network-side device may be implemented in the baseband apparatus 133. The baseband apparatus 133 includes a baseband processor.

For example, the baseband apparatus 133 may include at least one baseband board. A plurality of chips are disposed on the baseband board. As shown in FIG. 13, one chip is, for example, a baseband processor, and is connected to the memory 135 by using a bus interface, to invoke a program in the memory 135, to perform the operations of the network device shown in the foregoing method embodiment.

The network-side device may further include a network interface 136, and the interface is, for example, a common public radio interface (common public radio interface, CPRI).

Specifically, the network-side device 1300 in this embodiment of this application further includes: instructions or a program stored in the memory 135 and capable of running on the processor 134, where the processor 134 invokes the instructions or the program in the memory 135 to perform the method performed by the modules shown in FIG. 7 or FIG. 9. In addition, the same technical effects are achieved. To avoid repetition, details are not described herein again.

An embodiment of this application further provides a readable storage medium, storing a program or instructions, where when the program or the instructions are executed by a processor, the processes of the foregoing embodiment of the method for processing a measurement gap conflict are implemented, and the same technical effects can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application additionally provides a chip, including a processor and a communication interface, where the communication interface is coupled to the processor, the processor is configured to run a program or instructions to implement the processes of the foregoing embodiment of the method for processing a measurement gap conflict, and the same technical effects can be achieved. To avoid repetition, details are not described herein again.

It is understood that the chip mentioned in this embodiment of this application may also be referred to as a system on chip, a system chip, a system on a chip, or a system-on-a-chip, or the like.

An embodiment of this application further provides a computer program/program product. The computer program/program product is stored in a storage medium. The computer program/program product is executed by at least one processor to implement the processes in the above embodiment of the method for processing a measurement gap conflict, and the same technical effects can be achieved. To avoid repetition, details are not described herein again.

An embodiment of this application further provides a communication system, including: a terminal and a network-side device. The terminal may be configured to perform the steps of the method for processing a measurement gap conflict described above. The network-side device may be configured to perform the steps of the method for processing a measurement gap conflict described above.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the embodiments of this application is not limited to performing functions in the order shown or discussed, but may alternatively include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. With such understanding, the technical solution of this application, in essence or from the view of part contributing to the related art, may be embodied in a form of a computer software product. The computer software product is stored in a storage medium (such as an ROM/RAM, a magnetic disk, and an optical disk) and includes several instructions configured to enable a terminal (which may be a mobile phone, a computer, a server, an air conditioner, a network device, etc.) to execute the method according to each embodiment of this application.

Embodiments of this application are described above with reference to the accompanying drawings. However, this application is not limited to the foregoing specific embodiments. The foregoing specific embodiments are only illustrative rather than restrictive. Inspired by this application, a person of ordinary skill in the art can still derive a plurality of variations without departing from the essence of this application and the protection scope of the claims. All these variations shall fall within the protection of this application.

**Claims**

1. A method for processing a measurement gap conflict, comprising:

   sending, by a terminal, a first message to a network-side device, wherein the first message carries indication information of N measurement gaps, the N measurement gaps comprise M measurement gaps, the M measurement gaps conflict with each other and are used for measuring measurement objects located at a first frequency, and both N and M are integers greater than or equal to 2;
   receiving, by the terminal, a second message from the network-side device, wherein the second message carries a configuration parameter; and
   performing, by the terminal, first processing on the M measurement gaps based on the configuration parameter, wherein the first processing is non-drop processing performed based on a preset non-drop rule.

2. The method according to claim 1, wherein before the performing, by the terminal, first processing on the M measurement gaps based on the configuration parameter, the method further comprises:

   performing, by the terminal, second processing on a second measurement gap and the M measurement gaps in a case that the second measurement gap exists, wherein the second processing is dropping processing performed based on a preset drop rule; and the second measurement gap is used for measuring a measurement object located at a second frequency and conflicts with at least one of the M measurement gaps; and
   the performing, by the terminal, first processing on the M measurement gaps based on the configuration parameter comprises:
   performing, by the terminal based on the configuration parameter, the first processing on measurement gaps remained after the second processing is performed on the M measurement gaps.

3. The method according to claim 1, wherein after the performing, by the terminal, first processing on the M measurement gaps based on the configuration parameter, the method further comprises:
   performing, by the terminal in a case that a third measurement gap exists, third processing on the third measurement gap and measurement gaps remained after the first processing is performed on the M measurement gaps, wherein the third processing is drop processing performed based on a preset drop rule; and the third measurement gap is used for measuring a measurement object located at a third frequency and conflicts with the measurement gaps remained after the first processing is performed on the M measurement gaps.

4. The method according to claim 1, wherein after the performing, by the terminal, first processing on the M measurement gaps based on the configuration parameter, the method further comprises:
   performing, by the terminal based on the configuration parameter in a case that the N measurement gaps further comprise a fourth measurement gap, fourth processing on the fourth measurement gap and measurement gaps remained after the first processing is performed on the M measurement gaps, wherein the fourth processing is drop processing performed based on a preset drop rule; and the fourth measurement gap is used for measuring a measurement object located at the first frequency and conflicts with the measurement gaps remained after the first processing is performed on the M measurement gaps.

5. The method according to claim 1 or 2, wherein after the performing, by the terminal, first processing on the M measurement gaps based on the configuration parameter, the method further comprises:
   measuring, by the terminal by using the measurement gaps remained after the first processing is performed on the M measurement gaps, a measurement object corresponding to the remained measurement gap.

6. The method according to claim 3, wherein after the performing, by the terminal, first processing on the M measurement gaps based on the configuration parameter, the method further comprises:
measuring, by the terminal by using measurement gaps remained after the first processing and the third processing are performed on the M measurement gaps, a measurement object corresponding to the remained measurement gap.

7. The method according to claim 4, wherein after the performing, by the terminal, first processing on the M measurement gaps based on the configuration parameter, the method further comprises:
measuring, by the terminal by using measurement gaps remained after the first processing and the fourth processing are performed on the M measurement gaps, a measurement object corresponding to the remained measurement gap.

8. The method according to any one of claims 1 to 4, wherein the configuration parameter comprises at least one of a non-drop threshold, a non-drop identifier, a priority configuration parameter of a measurement gap, and a purpose configuration parameter of the measurement gap; and
the preset non-drop rule comprises at least one of the following:

   performing non-drop processing on a measurement gap whose priority configuration parameter is a first preset value;
   performing non-drop processing on measurement gaps between which a priority configuration parameter difference is less than or equal to a second preset value;
   performing non-drop processing on a measurement gap whose priority configuration parameter is less than or equal to a third preset value;
   performing non-drop processing on a measurement gap whose priority configuration parameter is greater than or equal to a fourth preset value;
   performing non-drop processing on measurement gaps with a same non-drop identifier;
   performing non-drop processing on a first measurement gap with a non-drop identifier and a second measurement gap conflicting with the first measurement gap;
   performing non-drop processing on measurement gaps with a same purpose configuration parameter;
   performing non-drop processing on a measurement gap whose priority is a first non-drop threshold;
   performing non-drop processing on a measurement gap whose priority is less than or equal to a second non-drop threshold;
   performing non-drop processing on a measurement gap whose priority is greater than or equal to a third non-drop threshold;
   performing non-drop processing on measurement gaps between which a priority difference is less than or equal to a fourth non-drop threshold;
   performing non-drop processing on a measurement gap whose priority configuration parameter is a fifth non-drop threshold;
   performing non-drop processing on measurement gaps between which a priority configuration parameter difference is less than or equal to a sixth non-drop threshold;
   performing non-drop processing on a measurement gap whose priority configuration parameter is less than or equal to a seventh non-drop threshold; and
   performing non-drop processing on a measurement gap whose priority configuration parameter is greater than or equal to an eighth non-drop threshold.

9. The method according to any one of claims 1 to 4, wherein the indication information of the N measurement gaps comprises at least one of the following:

   frequency indication information of the N measurement gaps;
   purpose indication information of the N measurement gaps;
   indication information of measurement objects associated with the N measurement gaps;
   indication information of measurement identities of the N measurement gaps;
   length indication information of the N measurement gaps; and
   period indication information of the N measurement gaps.

10. The method according to any one of claims 1 to 4, wherein the M measurement gaps meet any one of the following conditions:

a time domain interval value between any two of the M measurement gaps is less than or equal to a fifth preset value; and

a time domain coincidence degree between any two of the M measurement gaps is less than or equal to a sixth preset value.

11. The method according to claim 10, wherein the sixth preset value is determined by using the following formulas:

[MGL (Gap 1) - X] $\geq$ minimum MGL (FR1 or FR2), and [MGL (Gap 2) - X] $\geq$ minimum MGL (FR1 or FR2), wherein X represents the sixth preset value, MGL (Gap 1) and MGL (Gap 2) respectively represent minimum gap lengths of two measurement gaps, and minimum MGL (FR1 or FR2) represents minimum gap lengths in two frequency ranges.

12. The method according to any one of claims 1 to 4, wherein the M measurement gaps comprise a plurality of multi-universal subscriber identity module MUSIM gaps.

13. A method for processing a measurement gap conflict, comprising:

receiving, by a network-side device, a first message from a terminal, wherein the first message carries indication information of N measurement gaps, the N measurement gaps comprise M measurement gaps, the M measurement gaps conflict with each other and are used for measuring measurement objects located at a first frequency, and both N and M are integers greater than or equal to 2; and

sending, by the network-side device, a second message to the terminal, wherein the second message carries a configuration parameter, the configuration parameter is used for non-drop processing, and the non-drop processing is based on a preset non-drop rule.

14. The method according to claim 13, wherein the configuration parameter comprises at least one of a non-drop threshold, a non-drop identifier, a priority configuration parameter of a measurement gap, and a purpose configuration parameter of the measurement gap; and

the preset non-drop rule comprises at least one of the following:

performing non-drop processing on a measurement gap whose priority configuration parameter is a first preset value;

performing non-drop processing on measurement gaps between which a priority configuration parameter difference is less than or equal to a second preset value;

performing non-drop processing on a measurement gap whose priority configuration parameter is less than or equal to a third preset value;

performing non-drop processing on a measurement gap whose priority configuration parameter is greater than or equal to a fourth preset value;

performing non-drop processing on measurement gaps with a same non-drop identifier;

performing non-drop processing on a first measurement gap with a non-drop identifier and a second measurement gap conflicting with the first measurement gap;

performing non-drop processing on measurement gaps with a same purpose configuration parameter;

performing non-drop processing on a measurement gap whose priority is a first non-drop threshold;

performing non-drop processing on a measurement gap whose priority is less than or equal to a second non-drop threshold;

performing non-drop processing on a measurement gap whose priority is greater than or equal to a third non-drop threshold;

performing non-drop processing on measurement gaps between which a priority difference is less than or equal to a fourth non-drop threshold;

performing non-drop processing on a measurement gap whose priority configuration parameter is a fifth non-drop threshold;

performing non-drop processing on measurement gaps between which a priority configuration parameter difference is less than or equal to a sixth non-drop threshold;

performing non-drop processing on a measurement gap whose priority configuration parameter is less than or equal to a seventh non-drop threshold; and

performing non-drop processing on a measurement gap whose priority configuration parameter is greater than or equal to an eighth non-drop threshold.

15. The method according to claim 13, wherein the indication information of the N measurement gaps comprises at least one of the following:

> frequency indication information of the N measurement gaps;
> purpose indication information of the N measurement gaps;
> indication information of measurement objects associated with the N measurement gaps;
> indication information of measurement identities of the N measurement gaps;
> length indication information of the N measurement gaps; and
> period indication information of the N measurement gaps.

16. The method according to claim 13, wherein the M measurement gaps meet any one of the following conditions:

> a time domain interval value between any two of the M measurement gaps is less than or equal to a fifth preset value; and
> a time domain coincidence degree between any two of the M measurement gaps is less than or equal to a sixth preset value.

17. The method according to claim 16, wherein the sixth preset value is determined by using the following formulas:

$$[\text{MGL (Gap 1)} - X] \geq \text{minimum MGL (FR1 or FR2)},$$

and $[\text{MGL (Gap 2)} - X] \geq$ minimum MGL (FR1 or FR2), wherein
X represents the sixth preset value, MGL (Gap 1) and MGL (Gap 2) respectively represent minimum gap lengths of two measurement gaps, and minimum MGL (FR1 or FR2) represents minimum gap lengths in two frequency ranges.

18. The method according to claim 16, wherein the M measurement gaps comprise a plurality of multi-universal subscriber identity module MUSIM gaps.

19. An apparatus for processing a measurement gap conflict, applied to a terminal, wherein the apparatus comprises:

> a sending module, configured to send a first message to a network-side device, wherein the first message carries indication information of N measurement gaps, the N measurement gaps comprise M measurement gaps, the M measurement gaps conflict with each other and are used for measuring measurement objects located at a first frequency, and both N and M are integers greater than or equal to 2;
> a receiving module, configured to receive a second message from the network-side device, wherein the second message carries a configuration parameter; and
> a first processing module, configured to perform first processing on the M measurement gaps based on the configuration parameter, wherein the first processing is non-drop processing performed based on a preset non-drop rule.

20. An apparatus for processing a measurement gap conflict, applied to a network-side device, wherein the apparatus comprises:

> a receiving module, configured to receive a first message from a terminal, wherein the first message carries indication information of N measurement gaps, the N measurement gaps comprise M measurement gaps, the M measurement gaps conflict with each other and are used for measuring measurement objects located at a first frequency, and both N and M are integers greater than or equal to 2; and
> a sending module, configured to send a second message to the terminal, wherein the second message carries a configuration parameter, the configuration parameter is used for non-drop processing, and the non-drop processing is based on a preset non-drop rule.

21. A terminal, comprising a processor and a memory, wherein the memory stores a program or instructions executable on the processor, and when the program or the instructions are executed by the processor, the steps of the method for processing a measurement gap conflict according to any one of claims 1 to 12 are implemented.

22. A network-side device, comprising a processor and a memory, wherein the memory stores a program or instructions executable on the processor, and when the program or the instructions are executed by the processor, the steps of the method for processing a measurement gap conflict according to any one of claims 13 to 18 are implemented.

23. A readable storage medium, wherein the readable storage medium stores a program or instructions, and when the program or the instructions are executed by a processor, the steps of the method for processing a measurement gap conflict according to any one of claims 1 to 12 are implemented, or the steps of the method for processing a measurement gap conflict according to any one of claims 13 to 18 are implemented.

Network-side device

Terminal

Terminal

FIG. 1

201

A terminal sends a first message to a network-side device, where the first message carries indication information of N measurement gaps, the N measurement gaps include M measurement gaps, and the M measurement gaps conflict with each other and are used for measuring measurement objects located at a first frequency

202

The terminal receives a second message from the network-side device, where the second message carries a configuration parameter

203

The terminal performs first processing on the M measurement gaps based on the configuration parameter, where the first processing is non-drop processing performed based on a preset non-drop rule

FIG. 2

Case a:

X

Gap 1

Gap 2

$|d| \leq X$

T (Time)

Case b:

X

Gap 1

Gap 2

$|d| > X$

T (Time)

Case c:

Gap 1

Gap 2

$|d| < 4 \text{ ms}$

T (Time)

Case d:

Gap 1

Gap 2

$|d| > 4 \text{ ms}$

T (Time)

FIG. 3

Gap 1: P=1

Gap 2: P=1

Gap 3: P=5

Gap 4: P=8

Gap 5: P=8

T (Time)

FIG. 4

Gap 1: P=1

Gap 2: P=1

Gap 3: P=5

Gap 4: P=8

T (Time)

**FIG. 5**

Gap 1: P=1

Gap 2: P=1

Gap 3: P=5

Gap 4: P=8

Gap 5: P=8

T (Time)

**FIG. 6**

MO 1

Gap 1

MO 2

Gap 2

MO 1   MO 2

Gap 12

T (Time)

**FIG. 7**

800

Apparatus for processing a
measurement gap conflict

801　Sending module

802　Receiving module

803　First processing module

FIG. 8

901

A network-side device receives a first message from a terminal, where the first message carries indication information of N measurement gaps, the N measurement gaps include M measurement gaps, and the M measurement gaps conflict with each other and are used for measuring measurement objects located at a first frequency

902

The network-side device sends a second message to the terminal, where the second message carries a configuration parameter, the configuration parameter is used for non-drop processing, and the non-drop processing is based on a preset non-drop rule

FIG. 9

1000

## Apparatus for processing a measurement gap conflict

1001

### Receiving module

1002

### Sending module

## FIG. 10

1100

### Communication device

1101

#### Processor

1102

#### Memory

## FIG. 11

FIG. 12

FIG. 13

## INTERNATIONAL SEARCH REPORT

| International application No. |
| --- |
| **PCT/CN2023/128012** |

### A.    CLASSIFICATION OF SUBJECT MATTER

H04W24/08(2009.01)i

According to International Patent Classification (IPC) or to both national classification and IPC

### B.    FIELDS SEARCHED

Minimum documentation searched (classification system followed by classification symbols)

IPC：H04W24/-，H04W72/-，H04W64/-

Documentation searched other than minimum documentation to the extent that such documents are included in the fields searched

Electronic data base consulted during the international search (name of data base and, where practicable, search terms used)

3GPP, CNABS, CNTXT, ENTXT, VEN, CNKI: 测量, 间隔, 间隙, 冲突, 重叠, 丢弃, measurement, gap, conflict, overlapping, discard, musim

### C.    DOCUMENTS CONSIDERED TO BE RELEVANT

| Category* | Citation of document, with indication, where appropriate, of the relevant passages | Relevant to claim No. |
| --- | --- | --- |
| X | WO 2018201503 A1 (HUAWEI TECHNOLOGIES CO., LTD.) 08 November 2018 (2018-11-08)<br>description, pages 13-16 | 1, 5, 8-10, 12-16, 18-23 |
| A | WO 2022146767 A1 (INTEL CORP.) 07 July 2022 (2022-07-07)<br>entire description | 1-23 |
| A | CN 103458519 A (SPREADTRUM COMMUNICATIONS (SHANGHAI) CO., LTD.) 18 December 2013 (2013-12-18)<br>entire description | 1-23 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 November 2023** | **04 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/128012**

| Patent document cited in search report | | | Publication date (day/month/year) | Patent family member(s) | | | Publication date (day/month/year) |
|---|---|---|---|---|---|---|---|
| WO | 2018201503 | A1 | 08 November 2018 | CN | 110463250 | A | 15 November 2019 |
| | | | | IN | 201947045533 | A | 15 November 2019 |
| | | | | KR | 20200003130 | A | 08 January 2020 |
| | | | | EP | 3609219 | A1 | 12 February 2020 |
| | | | | EP | 3609219 | A4 | 12 February 2020 |
| | | | | US | 2020068425 | A1 | 27 February 2020 |
| | | | | JP | 2020519143 | W | 25 June 2020 |
| | | | | CN | 110463250 | B | 22 April 2022 |
| | | | | JP | 7079793 | B2 | 02 June 2022 |
| | | | | US | 11445395 | B2 | 13 September 2022 |
| | | | | EP | 3609219 | B1 | 21 June 2023 |
| WO | 2022146767 | A1 | 07 July 2022 | None | | | |
| CN | 103458519 | A | 18 December 2013 | CN | 103458519 | B | 21 September 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211387682

- CN 202310517105